# EUROPEAN PATENT APPLICATION

(11) **EP 4 385 809 A1**
(43) Date of publication of application: **19.06.2024**
(21) Application number: 21957763.2
(22) Date of filing: 22.09.2021
(51) Int. Cl.: B60L 53/60, B60L 53/31, B60L 53/16

(54) **CHARGING SYSTEM**

(71) Applicant: Huawei Digital Power Technologies Co., Ltd., Shenzhen, Guangdong 518043 (CN)
(72) Inventor: DENG, Ziming, Shenzhen, Guangdong 518129 (CN); YANG, Zezhou, Shenzhen, Guangdong 518129 (CN); HE, Yuanning, Shenzhen, Guangdong 518129 (CN); REN, Zhanlin, Shenzhen, Guangdong 518129 (CN); GUO, Wei, Shenzhen, Guangdong 518129 (CN); YE, Wanxiang, Shenzhen, Guangdong 518129 (CN)
(74) Representative: Epping - Hermann - Fischer
(86) International application number: PCT/CN2021/119702
(87) International publication number: WO 2023/044622

(57) **Abstract**

A charging system includes n first charging modules, a first switch matrix, a second switch matrix, and m first output apparatuses. Each first charging module includes a plurality of first power converters, each first power converter has one output bus, the output bus of the first power converter is connected to the first switch matrix, and the first power converter is configured to output electric energy. The first switch matrix is configured to connect or disconnect output buses of any two of the plurality of first power converters. A j^{th} first output apparatus in the m first output apparatuses is denoted as a first output apparatus j, and the first output apparatus j is connected to a corresponding first charging module by using the second switch matrix. The second switch matrix is configured to transmit, to the first output apparatus j, electric energy on an output bus of a first power converter in any first charging module corresponding to the first output apparatus j.

## Description

### TECHNICAL FIELD

This application relates to the field of electronic technologies, and in particular, to a charging system.

### BACKGROUND

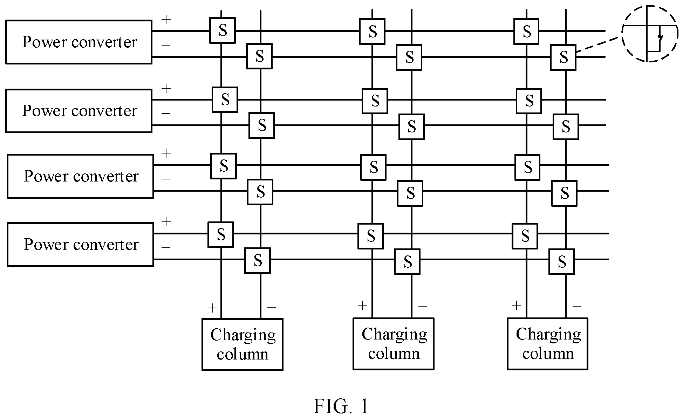

Generally, charging power provided by a power converter in a charging pile for an electric vehicle is fixed. With rapid growth of a charging power requirement of the electric vehicle, it is difficult for the fixed charging power provided for the electric vehicle to meet the charging power requirement of the electric vehicle. A charging speed of the electric vehicle is also affected. To improve power for charging the electric vehicle, if a power converter that provides charging power greater than or far greater than a power requirement of the electric vehicle is disposed in the charging pile, vacancy and waste of the power converter are caused. A main existing solution provides a full matrix charging cabinet with a plurality of power converters and a plurality of charging columns. FIG. 1 shows a charging system including a full matrix switching switch. Each charging column is connected to a positive output bus and a negative output bus of each power converter by using a plurality of switches S. When the charging system includes three charging columns and four power converters, a quantity of required switches S is 24. The full matrix charging cabinet requires a large quantity of switching switches. In addition, when a plurality of charging columns charge electric vehicles, energy transmission paths between power converters and the charging columns are complex, and utilization of the full matrix switches is low.

### SUMMARY

This application provides a charging system that can improve utilization of a power converter, uses fewer switching devices, supports dynamic and flexible power allocation, and has high utilization of the switching devices.

According to a first aspect, an embodiment of this application provides a charging system. The charging system may include n first charging modules, a first switch matrix, a second switch matrix, and m first output apparatuses, where n is a positive integer, and m is a positive integer greater than 1. Each first charging module includes a plurality of first power converters, each first power converter has one output bus, the output bus of the first power converter is connected to the first switch matrix, and the first power converter is configured to output electric energy. The first switch matrix is configured to connect or disconnect output buses of any two of the plurality of first power converters. The second switch matrix is connected to each first charging module by using the first switch matrix, and a first output apparatus j is connected to a corresponding first charging module by using the second switch matrix, where 1≤j≤m. The second switch matrix is configured to provide electric energy output by one or more of the n first charging modules for the corresponding first output apparatus j.

In a charging architecture provided in this embodiment of this application, the first output apparatus may be a charger or a charging pile. The first switch matrix may be an energy control apparatus including at least one switch. The second switch matrix may be an energy control apparatus including a plurality of switches. The charging architecture may include the n first charging modules, and n may be greater than 1 or equal to 1. Each first charging module may include a plurality of first power converters. By using the first switch matrix, output buses of any two first power converters in each first charging module may be interconnected. It can be learned that the first switch matrix has a capability of converging power output by a plurality of first power converters on an output bus of one first power converter, that is, a capability of adjusting electric energy output by the first charging module. In addition, the first output apparatus j in the charging architecture may correspond to at least one first charging module. The first output apparatus j is connected to the corresponding first charging module by using the second switch matrix. The second switch matrix may enable the first output apparatus j to obtain electric energy output by the corresponding first charging module. The electric energy output by the first charging module may be electric energy output by one or more first power converters in the first charging module. With such a design, the first output apparatus j may obtain power output by different quantities of first power converters, so that a manner in which the first output apparatus obtains power is flexible, and utilization of the first power converter in the first charging module is high. In addition, the first charging module does not need to be connected to an output bus of each first power converter, thereby greatly reducing a quantity of switching devices. In a possible design, the first switch matrix includes at least one first switch 101. The output buses of the two first power converters are separately connected to a same first switch 101. When the first switch 101 is in an on state, the output buses of the two first power converters are connected. When the first switch 101 is in an off state, the output buses of the two first power converters are disconnected.

In this embodiment of this application, the first switch matrix may include one or more first switches. One first switch is disposed between output buses of any two first power converters. For example, the two first power converters are a first power converter 1 and a first power converter 2. One first switch is disposed between an output bus of the first power converter 1 and an output bus of the first power converter 2. When the first switch is in the on state, the output bus of the first power converter 1 and the output bus of the first power converter 2 are connected. When the first switch is in the off state, the output bus of the first power converter 1 and the output bus of the first power converter 2 are disconnected. Power convergence control of one or more first power converters in the first charging module may be implemented by controlling the first switch in the first switch matrix. In this way, power output by any first power converter in the first charging module is flexibly scheduled to an output bus of any first power converter. In addition, power on an output bus of any first power converter may be provided for any first output apparatus corresponding to the first charging module by using the second switch matrix, so that any first output apparatus may obtain electric energy output by first power converters in one or more first charging modules.

In a possible design, the second switch matrix includes a plurality of second switches 102. The first output apparatus j corresponds to x first charging modules, x is a positive integer not greater than n, and an i^{th} first charging module in the x first charging modules is a first charging module (i, j), where 1≤i≤x. Quantities of first charging modules corresponding to the first output apparatuses are the same or different. The first output apparatus j is connected to the corresponding x first charging modules by using x second switches 102. A second switch 102 (i, j) in the x second switches 102 is connected to an output bus of a first power converter in the first charging module (i, j), and is connected to the first output apparatus j. When the second switch 102 (i, j) is in an on state, electric energy on the output bus of the first power converter in the first charging module (i, j) is transmitted to the first output apparatus j.

In this embodiment of this application, each first output apparatus may have a corresponding first charging module. The first charging module (i, j), the second switch 102 (i, j) connected to the first output apparatus j, and the first output apparatus j are in a vertical control relationship. An output bus of any first power converter in the first charging module (i, j) may be connected to the second switch 102 (i, j), and the second switch 102 (i, j) may be connected to the first output apparatus j. Based on control of the first switch matrix, power output by the first power converter in the first charging module (i, j) may be scheduled to the first output apparatus j by using the second switch (i, j). Based on control of the first switch matrix and control of the second switch in the second switch matrix, power output by any one or more first power converters in the first charging module connected to the second switch may be scheduled to a first output apparatus connected to the second switch.

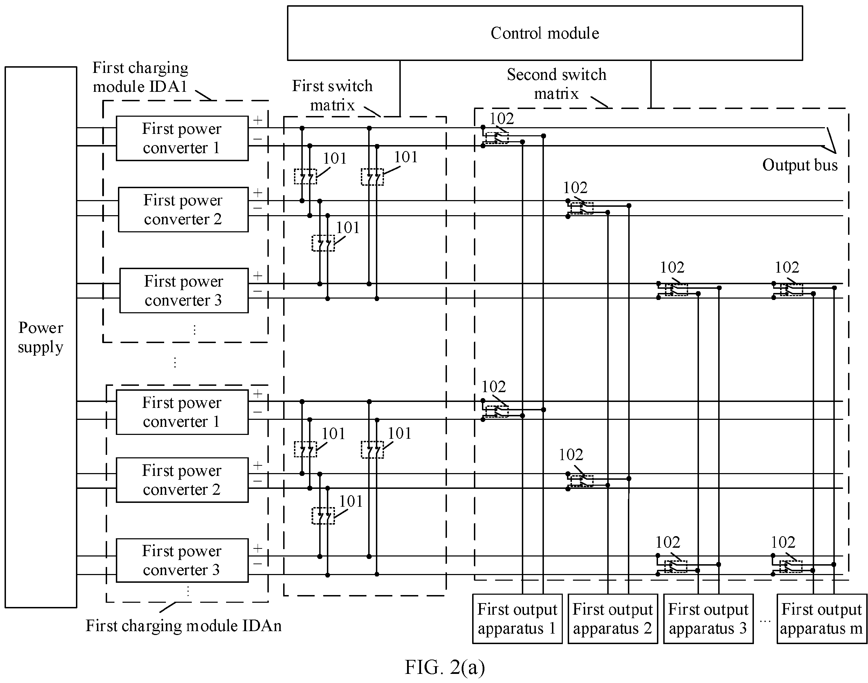

In a possible design, there may be at least one first charging module in the charging system, and each of the at least one first charging module may be connected to a plurality of first output apparatuses, in other words, each first charging module may correspond to a plurality of first output apparatuses. An output bus of each first power converter in each first charging module may be connected to at least one of a plurality of corresponding first output apparatuses by using the first switch matrix and the second switch matrix. In this embodiment of this application, each of the n first charging modules in the charging system may have an identification, and identifications of the n first charging modules may be respectively denoted as an identification IDA1, an identification IDA2, ..., and an identification IDAn. As shown in FIG. 2(a), the identification IDA1 of the first charging module may mean a first charging module IDA1. Similarly, the identification IDAn of the first charging module may mean a first charging module IDAn. There may be at least one first charging module in the charging system. For example, first output apparatuses connected to (or corresponding to) the first charging module IDA1 include a first output apparatus 1 and a first output apparatus 2. In other words, first charging modules connected to (or corresponding to) the first output apparatus 1 may include the first charging module IDA1, and first charging modules connected to (or corresponding to) the first output apparatus 2 may include the first charging module IDA1.

In some examples, an output bus of each of all first power converters in each first charging module is connected to at least one of a plurality of corresponding first output apparatuses by using the second switch matrix. For example, in each first charging module, an output bus of each first power converter may be connected to one first output apparatus by using the second switch matrix. Alternatively, an output bus of each first power converter may be connected to a plurality of first output apparatuses by using the second switch matrix. Alternatively, output buses of some first power converter are connected to one first output apparatus by using the second switch matrix, and output buses of other first power converters are connected to a plurality of first output apparatuses by using the second switch matrix. By controlling the first switch matrix and the second switch matrix, power output by one or more first power converters in each first charging module may be scheduled to any first output apparatus corresponding to the first charging module, thereby improving utilization of the first power converters in the first charging module.

In a possible design, a quantity of the plurality of first power converters included in each of the at least one first charging module is a preset quantity. In the at least one first charging module included in the charging system, each first charging module includes a same quantity of first power converters. The preset quantity may be 2, 3, 4, or the like. For example, each first charging module may include two first power converters. Alternatively, each first charging module may include three first power converters. Alternatively, each first charging module may include four first power converters. Similarly, each first charging module may include n first power converters, where n may be any positive integer.

In a possible design, when the charging system includes a plurality of first charging modules, quantities of first power converters included in two first charging modules may be different in the charging system. It is assumed that the two first charging modules are a first charging module IDA1 and a first charging module IDA2. The first charging module IDA1 may include n1 first power converters, and the first charging module IDA2 may include n2 first power converters, where n1 and n2 are different values.

In a possible design, the charging system may further include s second charging modules, where s is a positive integer greater than 1. Each second charging module includes at least one second power converter, each second power converter has one output bus, the output bus of the second power converter is connected to the second switch matrix, and the second power converter is configured to output electric energy. The first output apparatus j is connected to a corresponding second charging module by using the second switch matrix. The second switch matrix is further configured to provide electric energy output by one or more of the s second charging modules for the corresponding first output apparatus j.

In this embodiment of this application, each second charging module includes at least one second power converter, and the second power converter is connected to only the second switch matrix. Electric energy on an output bus of a second power converter in the second charging module is only electric energy output by the second power converter. That is, electric energy on an output bus of each second power converter is electric energy of fixed power. Each first output apparatus may have at least one corresponding second charging module. The first output apparatus j is connected to the corresponding second charging module by using the second switch matrix. In such a design, the first output apparatus j may alternatively obtain electric energy output by a second power converter in any second charging module corresponding to the first output apparatus j. It can be learned that the first output apparatus in the charging system can obtain not only electric energy output by the second power converter in the second charging module, but also electric energy output by the first power converter in the first charging module, so that a path for scheduling power to the first output apparatus is more flexible. This improves flexibility of charging the first output apparatus by the charging system, and also reflects good scalability of the charging system.

In a possible design, the second switch matrix further includes a plurality of third switches 103. The first output apparatus j corresponds to y second charging modules, y is a positive integer not greater than s, and a k^{th} second charging module in the y second charging modules is a second charging module (k, j), where 1≤k≤y. Quantities of second charging modules corresponding to first output apparatuses are the same or different. The first output apparatus j is connected to the y corresponding second charging modules by using y third switches 103. A third switch 103 (k, j) in the y third switches 103 is connected to an output bus of a second power converter in the second charging module (k, j), and is connected to the first output apparatus j. When the third switch 103 (k, j) is in an on state, electric energy on the output bus of the second power converter in the second charging module (k, j) is transmitted to the first output apparatus j.

In this embodiment of this application, the second switch matrix includes a plurality of third switches. For ease of distinguishing, a switch connected between the output bus of the second power converter in the second charging module and the first output apparatus is denoted as the third switch. Each first output apparatus may have a corresponding second charging module. The second charging module (k, j), the third switch 103 (k, j) connected to the first output apparatus j, and the first output apparatus j are in a vertical control relationship. An output bus of any second power converter in the second charging module (k, j) may be connected to the third switch 103 (k, j), and the third switch 103 (k, j) may be connected to the first output apparatus j. By controlling the third switch 103 (k, j), power output by the second power converter in the second charging module (k, j) may be scheduled to the first output apparatus j. Based on control of the third switch in the second switch matrix, power output by any one or more second power converters in the second charging module connected to the third switch may be scheduled to a first output apparatus connected to the third switch.

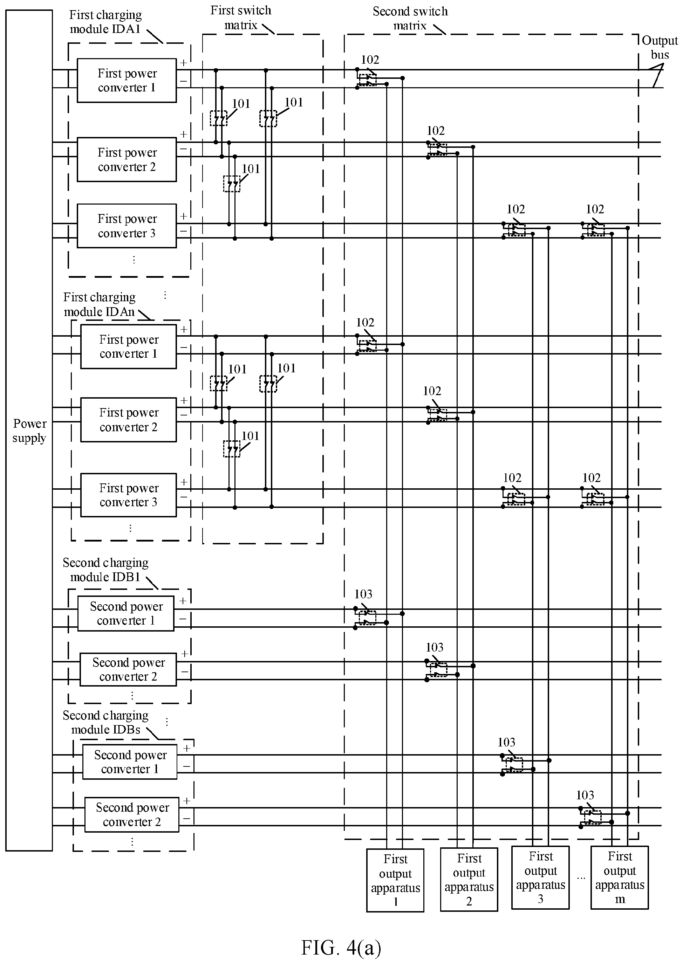

In a possible design, there may be at least one second charging module in the charging system. Each of the at least one second charging module may be connected to a plurality of first output apparatuses, or each second charging module may correspond to a plurality of first output apparatuses. An output bus of each second power converter in each second charging module is connected to at least one of the plurality of corresponding first output apparatuses by using the second switch matrix. In this embodiment of this application, there are s second charging modules in the charging system. Each second charging module may have an identification, and identifications of the s second charging modules may be respectively denoted as an identification IDB 1, an identification IDB2, ..., and an identification IDBs. As shown in FIG. 4(a), the identification IDB1 of the second charging module may mean a second charging module IDB1. Similarly, the identification IDBs of the second charging module may mean a second charging module IDBs. There may be at least one second charging module in the charging system. For example, first output apparatuses connected to (or corresponding to) the second charging module IDB1 may include a first output apparatus 1 and a first output apparatus 2. In other words, second charging modules connected to (or corresponding to) the first output apparatus 1 may include the second charging module IDB1, and second charging modules connected to (or corresponding to) the first output apparatus 2 may include the second charging module IDB1.

In some examples, an output bus of each second power converter in each second charging module is connected to at least one of a plurality of corresponding first output apparatuses by using the second switch matrix. For example, an output bus of each second power converter may be connected to one first output apparatus by using the second switch matrix. Alternatively, an output bus of each second power converter may be connected to a plurality of first output apparatuses by using the second switch matrix. Alternatively, output buses of some second power converter are connected to one first output apparatus by using the second switch matrix, and output buses of other second power converter are connected to a plurality of first output apparatuses by using the second switch matrix. By controlling the second switch matrix, power output by one or more second power converters in each second charging module may be scheduled to any first output apparatus corresponding to the second charging module, thereby improving utilization of the second power converter in each second charging module.

In a possible design, the charging system further includes s second charging modules and p second output apparatuses, where s is a positive integer greater than 1, and p is a positive integer. A second output apparatus a is connected to a corresponding second charging module by using the second switch matrix. The second output apparatus a is an a^{th} second output apparatus in the p second output apparatuses, where 1≤a≤p. The second switch matrix is further configured to provide electric energy output by one or more of the s second charging modules for the corresponding second output apparatus a.

In this embodiment of this application, the charging system has good scalability and compatibility. The first output apparatus j may obtain, by using the second switch matrix, electric energy output by the second power converter in the second charging module. The second output apparatus a may obtain, by using the second switch matrix, electric energy output by one or more second charging modules. Compared with the second output apparatus a, the first output apparatus j has more flexible electric energy power adjustment manner. Maximum power of electric energy that can be obtained by the first output apparatus j may be greater than maximum power of electric energy that can be obtained by the second output apparatus. Two types of output apparatuses are provided in the charging system to meet to-be-charged devices with different power requirements.

In a possible design, the second switch matrix in the charging system further includes a plurality of fourth switches 104. Each second charging module includes a plurality of second power converters. The second output apparatus a corresponds to z second charging modules, z is a positive integer not greater than s, and an r^{th} second charging module in the z second charging modules is a second charging module (r, a), where 1≤r≤z. Quantities of second charging modules corresponding to second output apparatuses are the same or different. The second output apparatus a is connected to the z corresponding second charging modules by using z fourth switches 104. A fourth switch 104 (r, a) in the z fourth switches 104 is connected to an output bus of a second power converter in the second charging module (r, a), and is connected to the second output apparatus a. When the fourth switch 104 (r, a) is in an on state, electric energy on the output bus of the second power converter in the second charging module r is transmitted to the second output apparatus a.

In this embodiment of this application, each second output apparatus may have a corresponding second charging module. The second charging module (r, a), the fourth switch 104 (r, a) connected to the second output apparatus a, and the second output apparatus a are in a vertical control relationship. An output bus of a second power converter in the second charging module r may be connected to the fourth switch 104 (r, a), and the fourth switch 104 (r, a) may be connected to the second output apparatus a. By controlling the fourth switch 104 (r, a), power output by one second power converter in the second charging module (r, a) may be scheduled to the second output apparatus a.

In a possible design, there may be at least one second charging module in the charging system. Each of the at least one second charging module may be connected to at least two second charging modules, or each second charging module may correspond to at least two second charging modules. For example, second output apparatuses connected to (or corresponding to) the second charging module IDB1 in the charging system may include a second output apparatus 1 and a second output apparatus 2. In some examples, each second charging module may include a plurality of second power converters, and an output bus of each second power converter is connected to at least one of a plurality of corresponding second output apparatuses by using the second switch matrix. For example, an output bus of each second power converter may be connected to one second output apparatus by using the second switch matrix. Alternatively, an output bus of each second power converter may be connected to a plurality of second output apparatuses by using the second switch matrix. Alternatively, output buses of some second power converters are connected to one second output apparatus by using the second switch matrix, and output buses of other second power converters are connected to a plurality of second output apparatuses by using the second switch matrix.

### BRIEF DESCRIPTION OF DRAWINGS

FIG. 1 is a schematic diagram of a structure of a full matrix charging cabinet;
FIG. 2(a) is a schematic diagram of a structure of a charging system according to this application;
FIG. 2(b) is a schematic diagram of a case in which a first output apparatus corresponds to a first charging module;
FIG. 2(c) is a schematic diagram of a structure of a charging system according to this application;
FIG. 3(a) is a schematic diagram of a specific structure of a charging system according to this application;
FIG. 3(b) is a schematic diagram of a specific structure of a charging system according to this application;
FIG. 3(c) is a schematic diagram of a specific structure of a charging system according to this application;
FIG. 3(d) is a schematic diagram of a specific structure of a charging system according to this application;
FIG. 3(e) is a schematic diagram of a specific structure of a charging system according to this application;
FIG. 3(f) is a schematic diagram of a specific structure of a charging system according to this application;
FIG. 3(g) is a schematic diagram of a specific structure of a charging system according to this application;
FIG. 3(h) is a schematic diagram of a specific structure of a charging system according to this application;
FIG. 3(i) is a schematic diagram of a specific structure of a charging system according to this application;
FIG. 3(j) is a schematic diagram of a specific structure of a charging system according to this application;
FIG. 3(k) is a schematic diagram of a specific structure of a charging system according to this application;

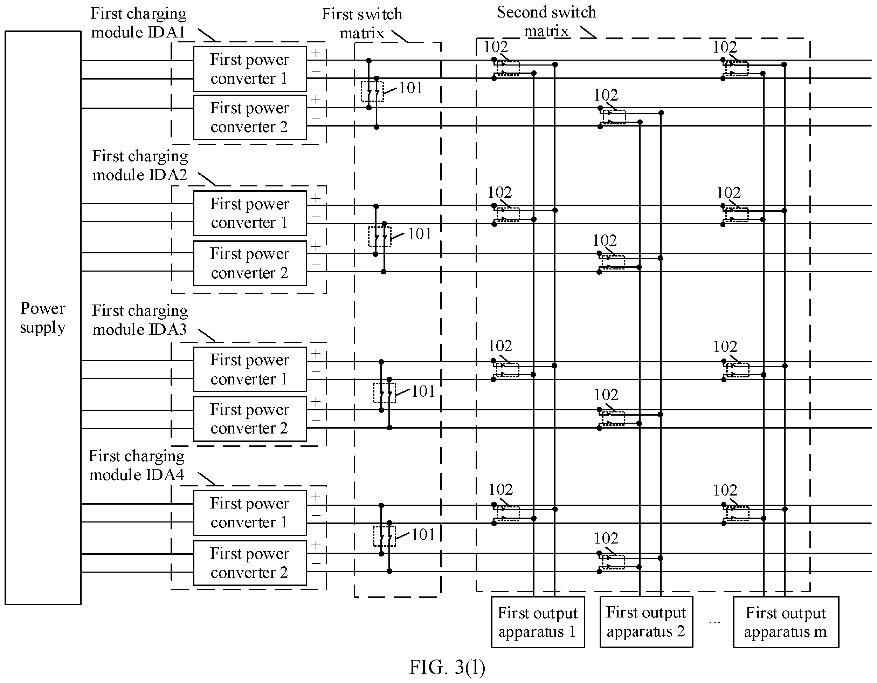

FIG. 3(1) is a schematic diagram of a specific structure of a charging system according to this application;

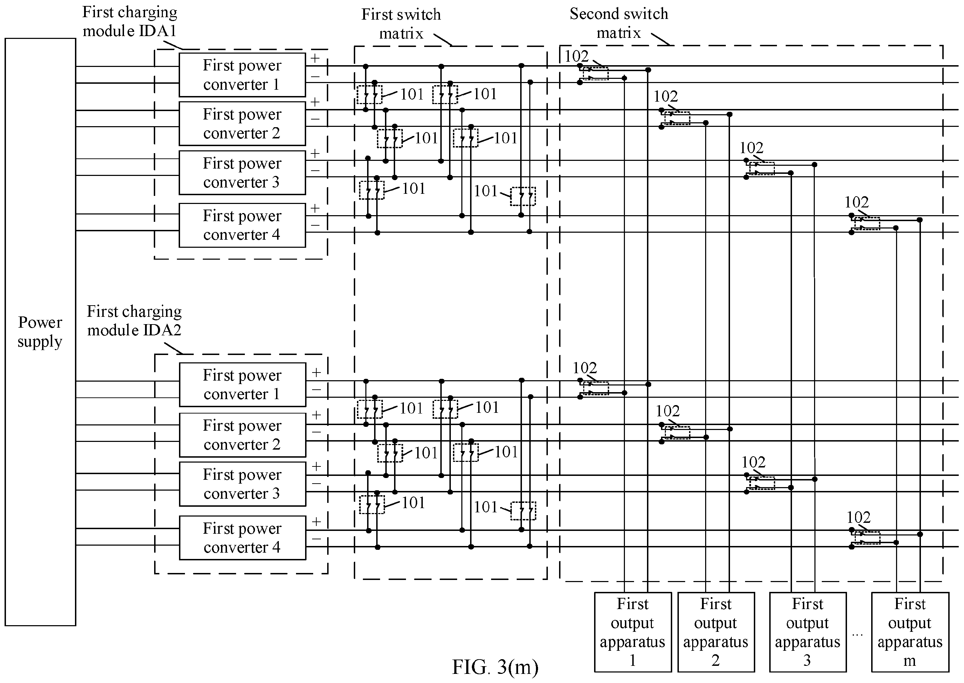

FIG. 3(m) is a schematic diagram of a specific structure of a charging system according to this application;

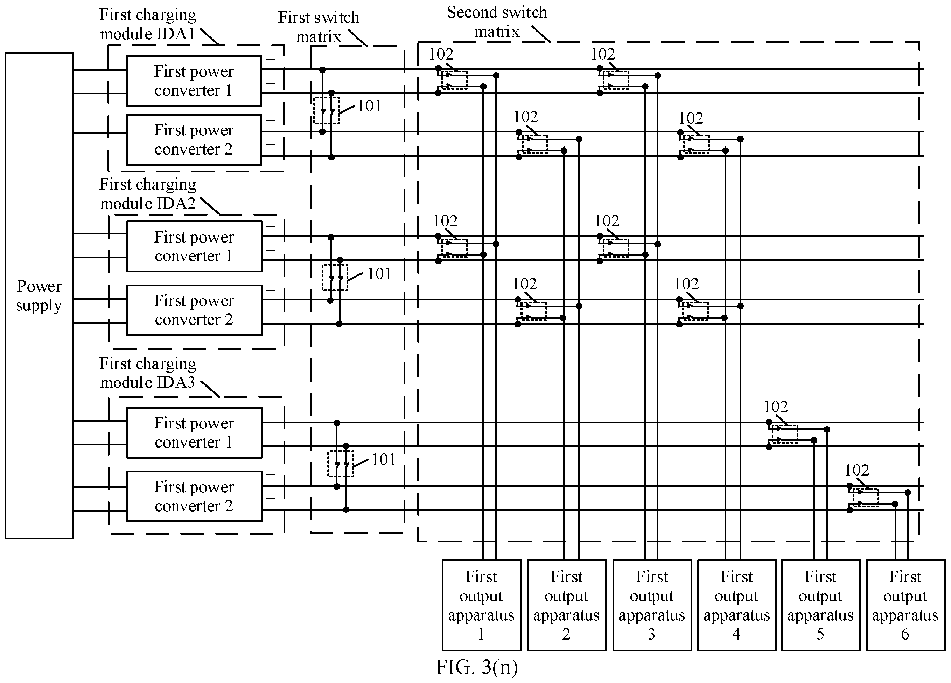

FIG. 3(n) is a schematic diagram of a specific structure of a charging system according to this application;
FIG. 4(a) is a schematic diagram of a structure of another charging system according to this application;

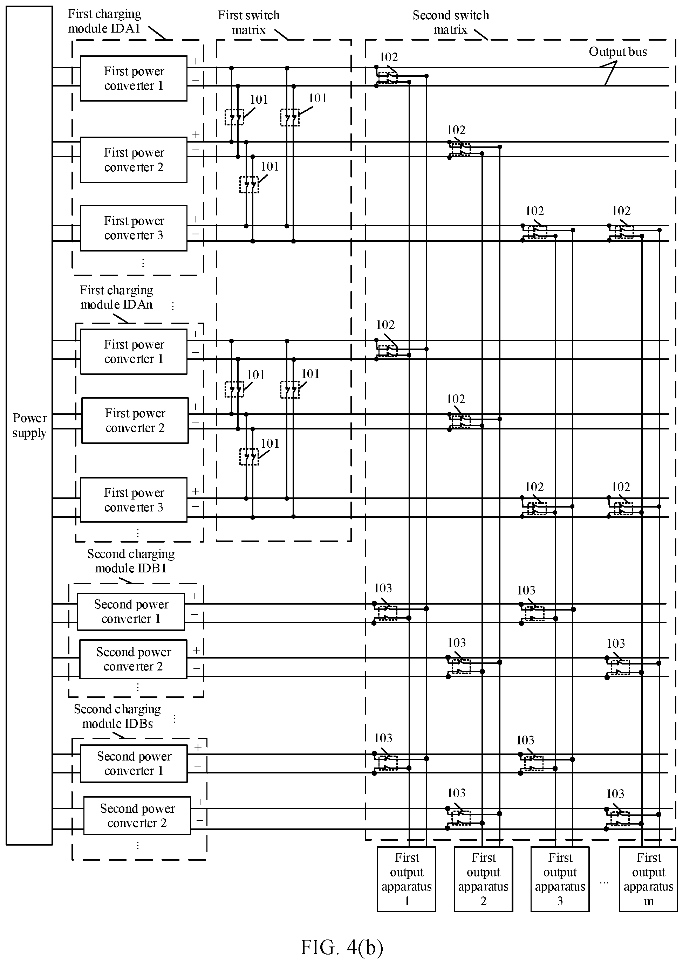

FIG. 4(b) is a schematic diagram of a case in which a first output apparatus corresponds to a second charging module;

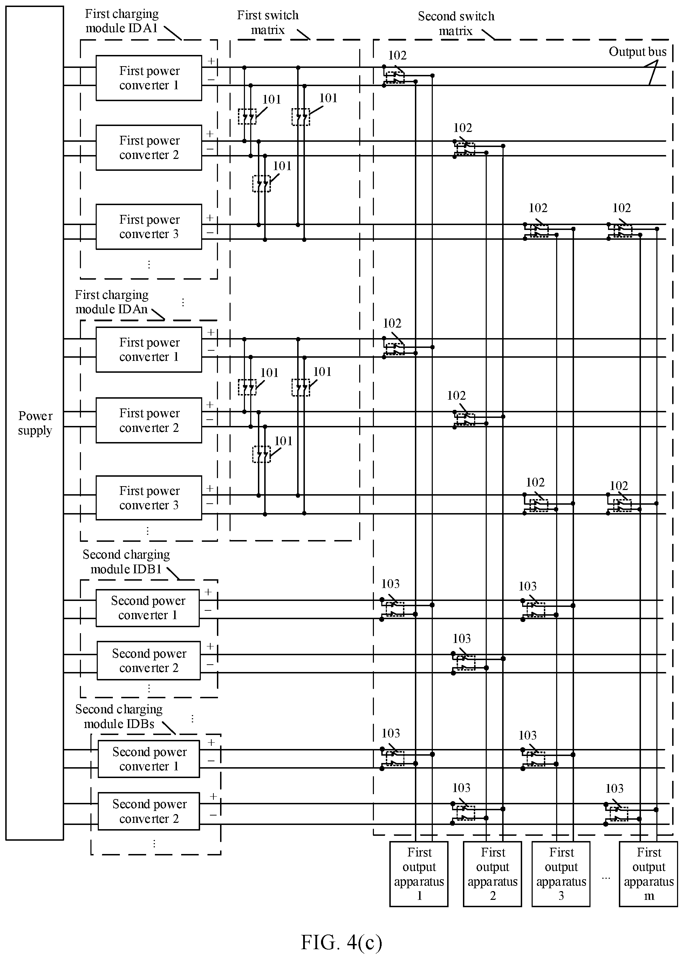

FIG. 4(c) is a schematic diagram of a case in which a first output apparatus corresponds to a second charging module;

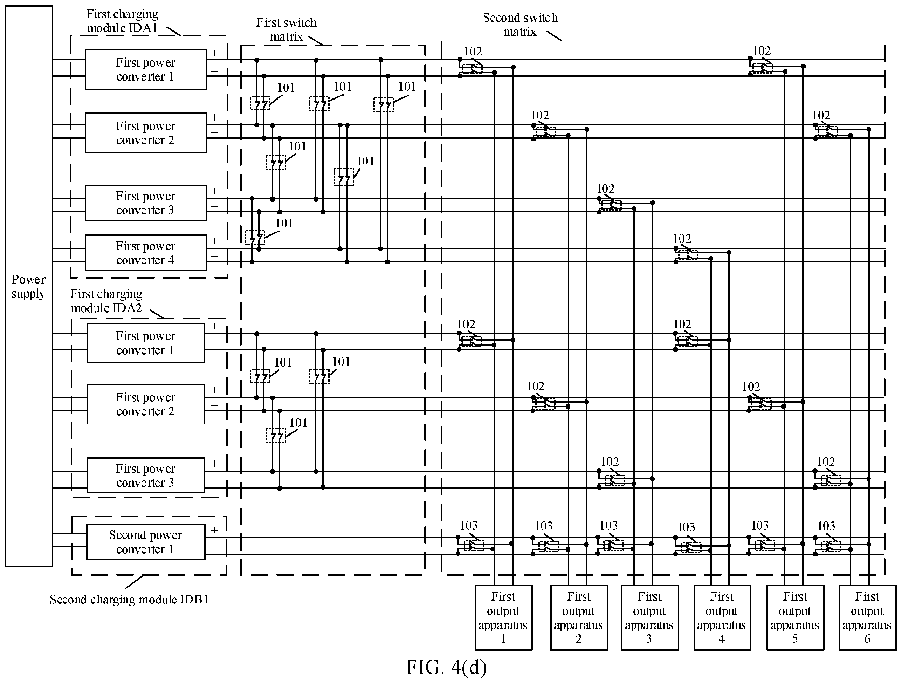

FIG. 4(d) is a schematic diagram of a specific structure of a charging system according to this application;

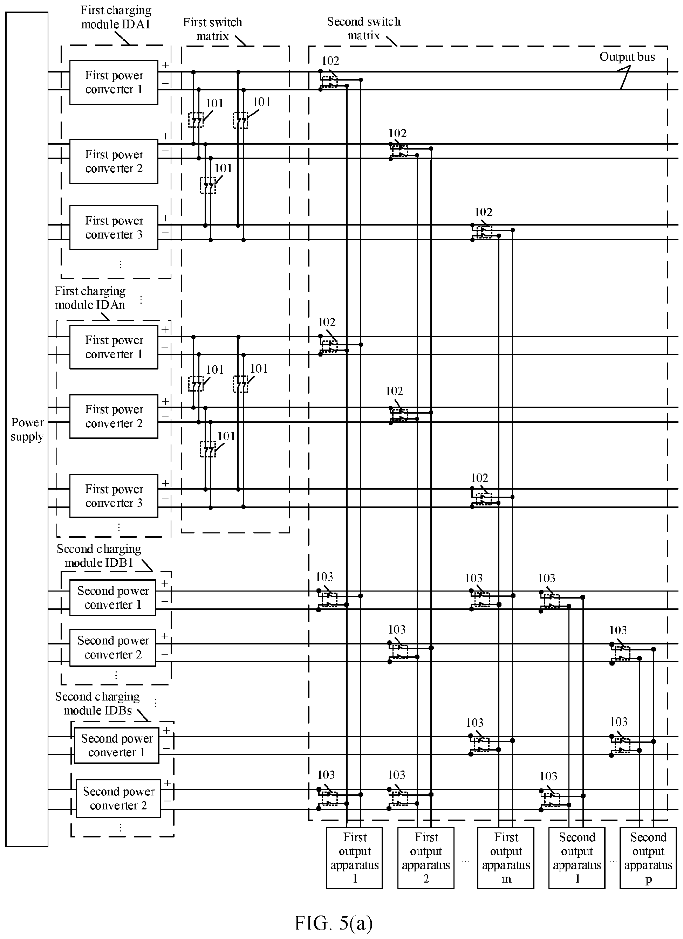

FIG. 5(a) is a schematic diagram of a structure of another charging system according to this application;

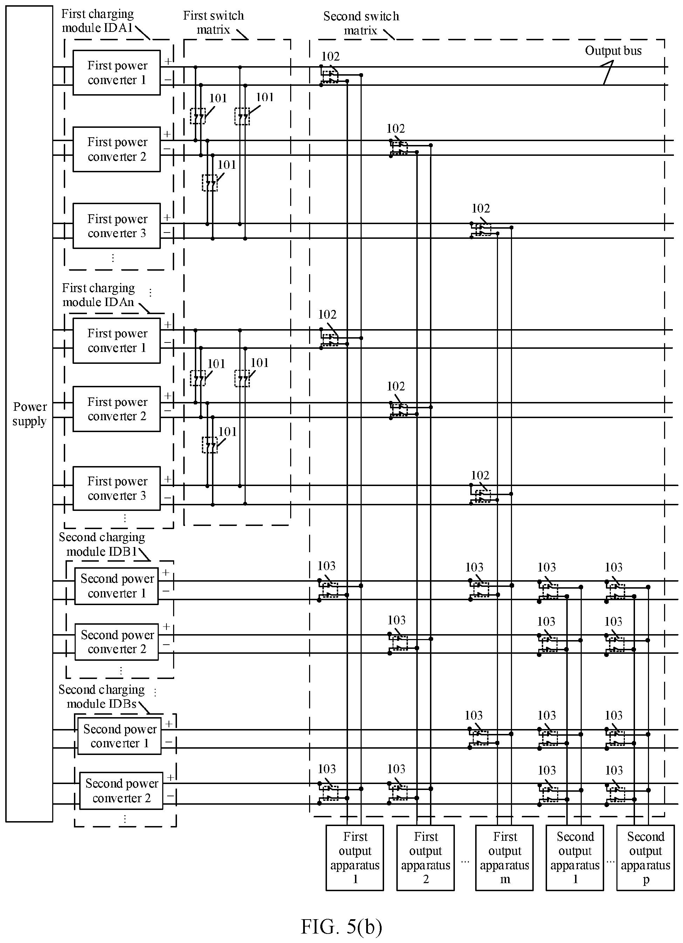

FIG. 5(b) is a schematic diagram of a case in which a second output apparatus corresponds to a second charging module;

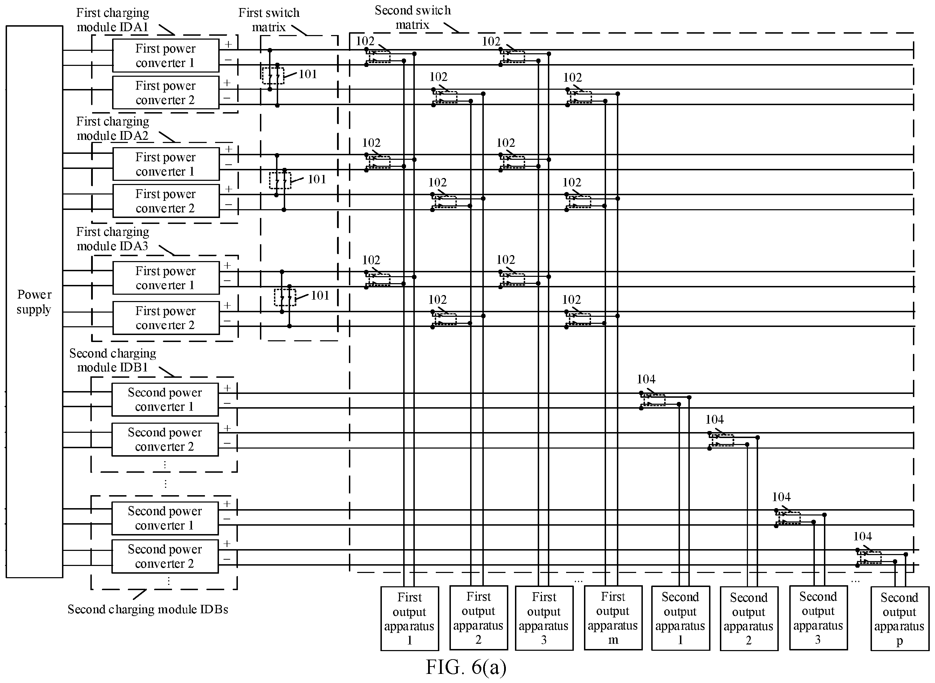

FIG. 6(a) is a schematic diagram of a structure of another charging system according to this application;

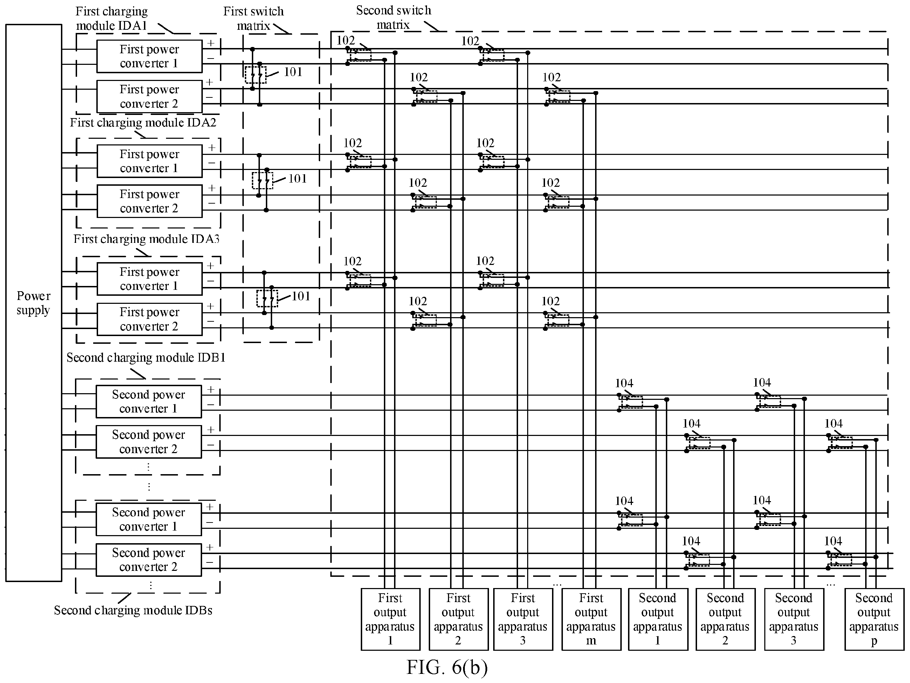

FIG. 6(b) is a schematic diagram of a case in which a second output apparatus corresponds to a second charging module;

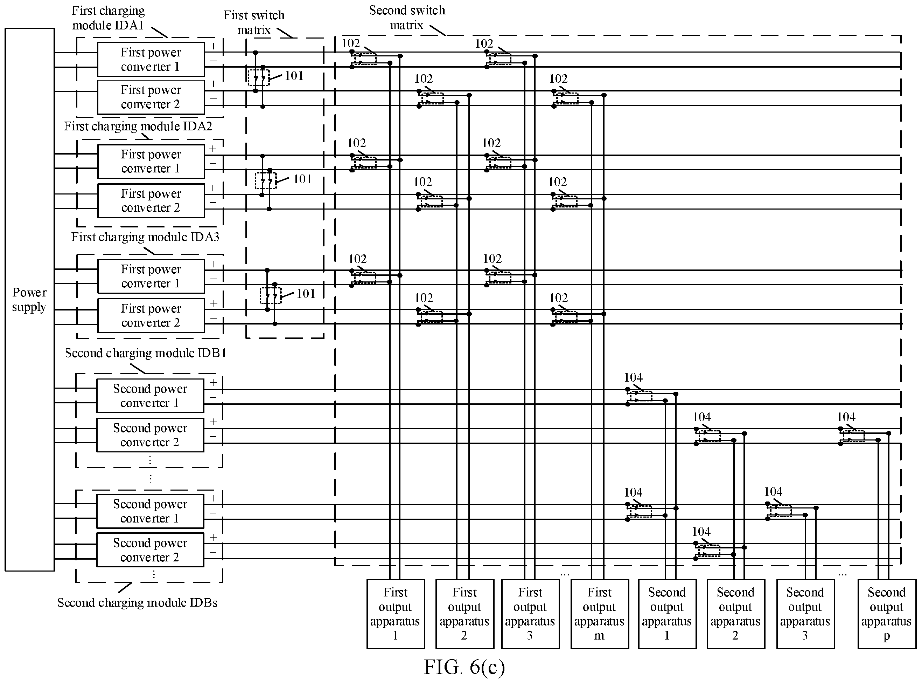

FIG. 6(c) is a schematic diagram of a case in which a second output apparatus corresponds to a second charging module; and

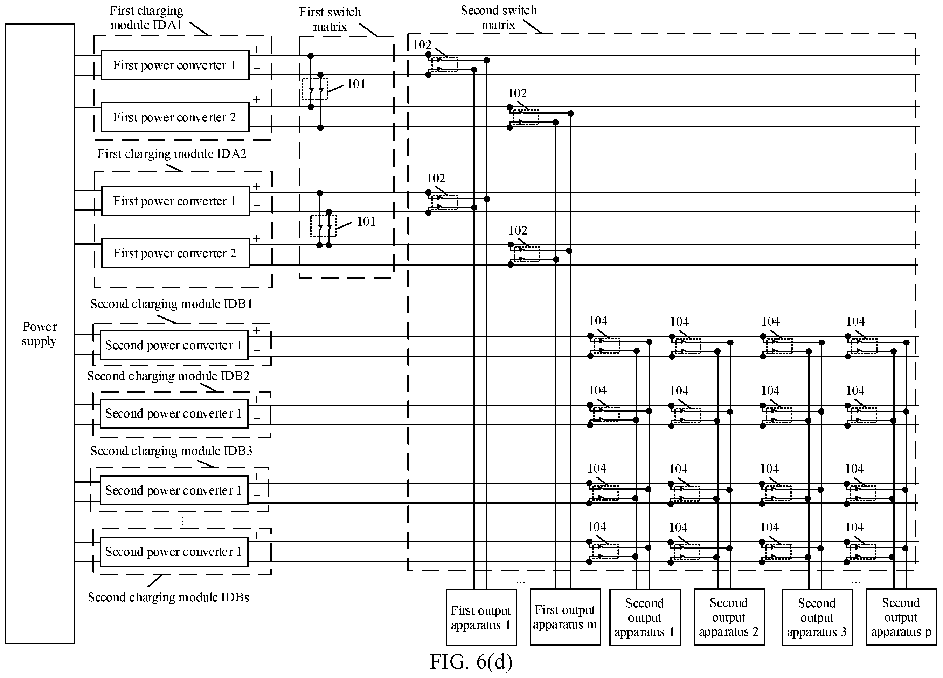

FIG. 6(d) is a schematic diagram of a case in which a second output apparatus corresponds to a second charging module.

### DESCRIPTION OF EMBODIMENTS

To make objectives, technical solutions, and advantages of this application clearer, the following further describes this application in detail with reference to accompanying drawings. It is clear that the described embodiments are merely some rather than all of embodiments of this application. It should be noted that, in descriptions of this application, terms such as "first" and "second" are only used for distinguishing the descriptions, and cannot be understood as an indicating or implying relative importance or indicating or implying a sequence.

Generally, charging power provided by a power converter in a charging pile for an electric vehicle is fixed. With rapid growth of a charging power requirement of the electric vehicle, it is difficult for the fixed charging power provided for the electric vehicle to meet the charging power requirement of the electric vehicle. A charging speed of the electric vehicle is also affected. To improve power for charging the electric vehicle, if a power converter that provides charging power greater than or far greater than a power requirement of the electric vehicle is disposed in the charging pile, vacancy and waste of the power converter are caused.

To improve utilization of the power converter, a main existing solution provides a full matrix charging cabinet with a plurality of power converters and a plurality of charging columns. The electric vehicle is connected to the charging column in the charging cabinet, and obtains electric energy from the charging column. In this solution, power output by all the power converters is dynamically and flexibly allocated to each charging column by switching a full matrix switch. FIG. 1 shows a charging system including a full matrix switching switch. Each charging column is connected to a positive output bus and a negative output bus of each power converter by using a plurality of switches S. When the charging system includes three charging columns and four power converters, a quantity of required switches S is 24. The full matrix charging cabinet requires a large quantity of switching switches. In addition, when a plurality of charging columns charge electric vehicles, energy transmission paths between power converters and the charging columns are complex, and control of the full matrix switch is also complex.

In view of this, this application provides a charging system. A small quantity of switching devices are used, power can be dynamically and flexibly allocated, and a control process is simple. Refer to FIG. 2(a). The charging system may include a power supply, n first charging modules, a module interconnection switch matrix (denoted as a first switch matrix), a power allocation switch matrix (denoted as a second switch matrix), and m first output apparatuses. In this embodiment of this application, n is a positive integer, and m is a positive integer greater than 1. It can be learned that the charging system may include at least one first charging module and a plurality of first output apparatuses.

The m first output apparatuses in the charging system may be separately denoted as a first output apparatus 1, a first output apparatus 2, ..., and a first output apparatus m. The first output apparatus may be an apparatus, for example, a charging connector or a charging column. A power-consuming device may obtain electric energy by using the first output apparatus, and the power-consuming device may be an electric vehicle or the like. The charging system may further include a control module. The control module may control the first switch matrix and the second switch matrix, for example, change a working status of the first switch matrix, change a working status of the second switch matrix, perform power scheduling on each charging module, and schedule power to the first output apparatus.

Each of the n first charging modules in the charging system may have an identification, and identifications (identification, ID) of the n first charging modules may be separately denoted as an identification IDA1, an identification IDA2, ..., and an identification ID An. The identification of the first charging module may include one or more of a number, a character, a character, or the like. As shown in FIG. 2(a), the identification IDA1 of the first charging module may mean a first charging module IDA1. Similarly, the identification IDAn of the first charging module may mean a first charging module IDAn.

Each first charging module may include a plurality of first power converters. The power supply is connected to an input side of each first power converter, and the power supply is configured to provide electric energy, for example, direct current power or alternating current power, for each first power converter. Each first power converter may process the electric energy provided by the power supply. For example, the first power converter may convert a direct current to an alternating current, a direct current to a direct current, an alternating current to a direct current, or an alternating current to an alternating current. For another example, the first power converter may perform boost processing, buck processing, or the like on the electric energy provided by the power supply. Each first power converter outputs electric energy, for example, power, through an output bus. An output bus of each first power converter is connected to the first switch matrix. As shown in FIG. 2(a), each first power converter has one output bus. In some examples, when the first power converter has a capability of converting an alternating current to an alternating current or converting a direct current to an alternating current, the first power converter has one output bus. In some examples, when the first power converter has a capability of converting a direct current to a direct current or converting an alternating current to a direct current, the output bus of the first power converter may include a positive bus and a negative bus. For ease of description, an example in which the first power converter has the capability of converting a direct current to a direct current or converting an alternating current to a direct current is used in the following for description.

The first switch matrix may be an energy control apparatus including at least one switch. The first switch matrix may connect output buses of any two first power converters in the first charging modules. Such a design may enable power output by the any two first power converters to converge, or may enable maximum power that can be obtained by an output bus of one first power converter in the two first power converters to be a sum of power output by the two first power converters. For example, when the first switch matrix connects an output bus of a first power converter 1 and an output bus of a first power converter 2 in the first charging module 1, power on the output bus (an output bus of a side that is of the first switch matrix and that is away from the first power converter) of the first power converter 1 or the output bus of the first power converter 2 is a sum of power output by the two first power converters. The control module may change electric energy power at the output bus of the first power converter by controlling the first switch matrix, to allocate output power of each first power converter. In other words, the control module may flexibly control power allocation in each first charging module by controlling the first switch matrix.

Each first output apparatus may correspond to at least one first charging module. For ease of description, a j^{th} first output apparatus in the m first output apparatuses is denoted as a first output apparatus j, where j may range from 1 to m, that is, 1≤j≤m. In this embodiment of this application, a first charging module corresponding to the first output apparatus j may be a first charging module connected (directly or indirectly connected) to the first output apparatus j. The second switch matrix may be connected to each first charging module by using the first switch matrix, in other words, the first switch matrix may be disposed between the second switch matrix and each first charging module. The first output apparatus j may be connected to the corresponding first charging module by using the second switch matrix. The second switch matrix may be an energy control apparatus including a plurality of switches. For example, the first output apparatus j may be connected to an output bus of a first power converter in the corresponding first charging module by using the second switch matrix, and the first output apparatus j may receive, through the connected output bus, electric energy output by the first charging module.

A quantity of first charging modules corresponding to the first output apparatus j may be greater than or equal to 1. In other words, the first output apparatus j may correspond to one first charging module, or may correspond to a plurality of first charging modules. As shown in FIG. 2(a), for example, j is 1. First charging modules corresponding to the first output apparatus 1 include the first charging module IDA1 and the first charging module IDAn. The first output apparatus 1 is connected to an output bus of a first power converter in the first charging module IDA1. The first output apparatus 1 is connected to an output bus of a first power converter in the first charging module IDAn.

The second switch matrix may be connected to each first output apparatus, and connected to each first charging module by using the first switch matrix. The second switch matrix may provide electric energy output by one or more of the n first charging modules for the corresponding first output apparatus j. In other words, the second switch matrix may provide (or transmit), for (to) the first output apparatus j, electric energy on an output bus of one first power converter in any first charging module corresponding to the first output apparatus j. By using the second switch matrix, the first output apparatus j can obtain power on an output bus of a first power converter (first power converter to which the first output apparatus j is connected) in the first charging module corresponding to the first output apparatus j. Based on control of the first switch matrix, a function of power allocation in each first charging module can be flexibly implemented, and the first output apparatus j can obtain power of one or more first power converters in each corresponding first charging module by using the first switch matrix and the second switch matrix.

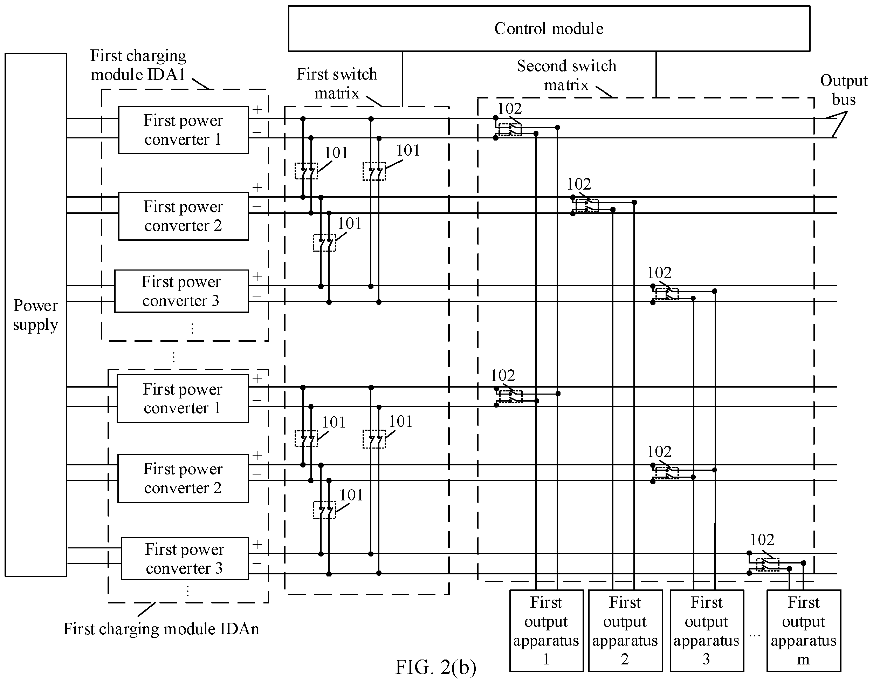

When the first output apparatus j corresponds to a plurality of first charging modules, it is assumed that the first output apparatus j corresponds to x first charging modules, where x is a positive integer not greater than n. The second switch matrix may enable the first output apparatus j to obtain power of some or all of the x first charging modules corresponding to the first output apparatus j. The control module may schedule, by controlling the second switch matrix, a plurality of first charging modules to provide power for the first output apparatus j, to allocate output power of the first charging modules. In other words, the control module may flexibly control power allocation between the first charging modules by controlling the second switch matrix. For ease of description, in this application, an i^{th} first charging module in the x first charging modules corresponding to the first output apparatus j is denoted as a first charging module (i, j). As shown in FIG. 2(b), first charging modules corresponding to the first output apparatus 1 are successively the first charging module IDA1 and the first charging module IDAn. A 1^{st} first charging module corresponding to the first output apparatus 1 is a first charging module (1, 1), and the first charging module (1, 1) is also the first charging module IDA1. A first charging module corresponding to the first output apparatus 2 is the first charging module IDA1. A 1^{st} first charging module corresponding to the first output apparatus 2 is a first charging module (1, 2), and the first charging module (1, 2) is also the first charging module IDA1. It is clear that the first charging module (i, j) in this application refers to the i^{th} first charging module in the first charging modules corresponding to the first output apparatus j, and is obviously different from a first charging module IDAi with an identification of IDAi.

As shown in FIG. 2(a), it is assumed that j is equal to 1. The first output apparatus 1 is used as an example for description. First charging modules corresponding to the first output apparatus 1 include the first charging module IDA1, a first charging module IDA2, and the first charging module IDAn. The second switch matrix may transmit electric energy on an output bus of a first power converter in the first charging module IDA1 to the first output apparatus 1. Alternatively, electric energy on an output bus of a first power converter in the first charging module IDA2 may be transmitted to the first output apparatus 1. Alternatively, electric energy on an output bus of a first power converter in the first charging module IDAn may be transmitted to the first output apparatus 1. In this way, the first output apparatus 1 can obtain electric energy on output buses of first power converters in a quantity of num1 (num1 is a positive integer not greater than a total quantity of first charging modules corresponding to the first output apparatus 1) first charging modules. For example, when the quantity num1 is 2, the second switch matrix may transmit, to the first output apparatus 1, electric energy on an output bus of a first power converter in each first charging module in two first charging modules (for example, the first charging module IDA1 and the first charging module IDAn) in the first charging modules corresponding to the first output apparatus 1. For example, when the quantity num1 is 1, the second switch matrix may transmit electric energy on an output bus of a first power converter in the first charging module IDA1 or the first charging module IDAn to the first output apparatus 1.

Compared with an existing charging system architecture including a full matrix switch, a charging system architecture that includes a composite matrix switch (that is, the first switch matrix and the second switch matrix) provided in this application can improve utilization of the first power converter. In addition, output buses of a plurality of first power converters are connected by using the first switch matrix, so that power of electric energy at the output bus of the first power converter can be increased. Electric energy on output buses of a plurality of power converters is provided for the first output apparatus by using the second switch matrix. It can be learned that the charging system architecture including the composite matrix switch provided in this application can implement flexible (flexible) power allocation. In addition, the first output apparatus may be connected to one first power converter in a corresponding first charging module, and does not need to be connected to all first power converters in the charging system. This greatly reduces a quantity of power switching elements (such as switches) in the charging system.

In a possible implementation, the first switch matrix may include at least one first switch 101. As shown in FIG. 2(a), in each first charging module, one first switch 101 is disposed between output buses of any two first power converters, in other words, the output buses of the two first power converters are connected to a same first switch 101. One first switch 101 is connected to output buses of two first power converters. For example, the first charging module IDA1 includes w first power converters (w is an integer greater than 2), and a t^{th} first power converter in the w first power converters may be denoted as a first power converter t (1≤t≤w). One first switch 101 is disposed between an output bus of the first power converter t and an output bus of each first power converter other than the first power converter t. For example, t is 1, and one first switch 101 is disposed between the output bus of the first power converter 1 and the output bus of the first power converter 2. One first switch 101 is disposed between the output bus of the first power converter 1 and an output bus of a first power converter 3. The rest may be deduced by analogy. One first switch 101 is disposed between the output bus of the first power converter 1 and an output bus of a first power converter w.

For any two first power converters in each first charging module, when one first switch 101 disposed between output buses of the two first power converters is in an on state, the output buses of the two first power converters are connected. When the first switch 101 disposed between the output buses of the two first power converters is in an off state, the output buses of the two first power converters are disconnected. For example, if the first switch 101 disposed between the output bus of the first power converter 1 and the output bus of the first power converter 2 is in an on state, the output bus of the first power converter 1 and the output bus of the first power converter 2 are connected. If the output bus of the first power converter 1 and the output bus of the first power converter 2 are in an off state, the output bus of the first power converter 1 and the output bus of the first power converter 2 are disconnected.

Based on the foregoing structure, the control module may flexibly allocate power of one or more first power converters in any first charging module by controlling a working status (an on state or an off state) of each first switch 101 in the first switch matrix.

In a possible implementation, the second switch matrix may include a plurality of second switches 102. The first output apparatus j may be connected to the x first charging modules corresponding to the first output apparatus j by using x second switches. A second switch 102 (i, j) in the x second switches may represent a second switch 102 that is connected to the first output apparatus j and that is connected to the first charging module (i, j) in the x first charging modules corresponding to the first output apparatus j. The second switch 102 (i, j) may be connected to an output bus of a first power converter in the first charging module (i, j). When the second switch 102 (i, j) is in the on state, electric energy on the output bus of the first power converter in the first charging module (i, j) is transmitted to the first output apparatus j.

As shown in FIG. 2(a), it is assumed that j is equal to 1. The first output apparatus 1 corresponds to two first charging modules: the first charging module IDA1 and the first charging module ID An. In the first charging modules corresponding to the first output apparatus 1, a 1^{st} first charging module is denoted as a first charging module (1, 1), and is also the first charging module IDA1. A 2^{nd} first charging module is denoted as a first charging module (2, 1), and is also the first charging module IDAn. A second switch 102 that is connected to the first charging module (1, 1) and that is connected to the first output apparatus 1 may be denoted as a second switch 102 (1, 1). A second switch 102 that is connected to the first charging module (2, 1) and that is connected to the first output apparatus 1 may be denoted as a second switch 102 (2, 1). When the second switch 102 (1, 1) is in an on state, electric energy on an output bus of a first power converter in the first charging module IDA1 may be transmitted to the first output apparatus 1. When the second switch 102 (2, 1) is in an on state, electric energy on an output bus of a first power converter in the first charging module IDAn may be transmitted to the first output apparatus 1. It can be learned that in the charging system, the control module may control the second switch 102 (1, 1) and the second switch 102 (2, 1) in the second switch matrix, so that the first output apparatus 1 can obtain power of the first charging module IDA1 and the first charging module ID An. Power of different first charging modules is flexibly scheduled to a same first output apparatus. Each switch in this application may include a positive switch and a negative switch. The positive switch is connected between a positive bus of an output bus of a power converter and a positive electrode end of an output apparatus. The negative switch is connected between a negative bus of an output bus of a power converter and a negative electrode end of an output apparatus. Alternatively, each switch may be a bipolar contactor, a solid state switch, a hybrid switch, or the like. This is not limited in embodiments of this application.

In some possible scenarios, the charging system may include one first charging module. That is, n is equal to 1. Each first output apparatus corresponds to the first charging module. The first output apparatus j is connected to a second switch 102, and the second switch 102 is connected to an output bus of a first power converter in the first charging module. In some examples, for a plurality of first power converters included in the first charging module, output buses of first power converters connected to first output apparatuses by using the second switch matrix may be different. That is, the first output apparatuses are connected to different first power converters. For example, it is assumed that the first charging module includes the first power converter 1 and the first power converter 2, and the charging system includes the first output apparatus 1 and the first output apparatus 2. The first output apparatus 1 is connected to the output bus of the first power converter 1, and the first output apparatus 2 is connected to the output bus of the first power converter 2. Alternatively, the first output apparatus 1 is connected to the output bus of the first power converter 2, and the first output apparatus 2 is connected to the output bus of the first power converter 1.

In some other examples, output buses of first power converters connected to some first output apparatuses by using the second switch matrix may be the same, that is, some first output apparatuses may be connected to a same first power converter. In other words, one first power converter may be connected to a plurality of first output apparatuses. For example, as shown in FIG. 2(a), a first output apparatus 3 and the first output apparatus m are connected to an output bus of a same first power converter by using two second switches 102.

Based on the charging architecture provided in this embodiment, the control module may provide, by controlling the working status of each first switch 101 in the first switch matrix and a working status of each second switch 102 in the second switch matrix, electric energy power at an output bus of any first power converter for any first output apparatus, to enable any first output apparatus to obtain electric energy output by one or more first power converters. In such a design, power output by any first power converter in the first charging module may be provided for any first output apparatus, in other words, output power of any first power converter may be allocated to any first output apparatus. It can be learned that the charging system provided in this application has capabilities of intelligent allocation and flexible charging.

In some other possible scenarios, the charging system may include a plurality of first charging modules, that is, n is greater than 1. The first output apparatus j may correspond to the x first charging modules, and the first output apparatus j is separately connected to the x corresponding first charging modules by using the x second switches 102, namely, a second switch 102 (1,j) to a second switch 102 (x,j). For a specific connection manner, refer to the foregoing embodiments. Details are not described herein again.

In some examples, quantities of first charging modules corresponding to the first output apparatuses may be the same. In other words, each first output apparatus is connected to a same quantity of first charging modules by using the second switch matrix. As shown in FIG. 2(a), a quantity of first charging modules connected to the first output apparatus 1 by using the second switch matrix is 2, a quantity of first charging modules connected to the first output apparatus 2 by using the second switch matrix is 2, a quantity of first charging modules connected to the first output apparatus 3 by using the second switch matrix is 2, and a quantity of first charging modules connected to the first output apparatus m by using the second switch matrix is 2. It can be learned that quantities of first charging modules corresponding to the first output apparatus 1, the first output apparatus 2, the first output apparatus 3, and the first output apparatus m are the same.

In some other examples, quantities of first charging modules corresponding to the first output apparatuses may be different, in other words, quantities of first charging modules corresponding to two first output apparatuses in the charging system are different. As shown in FIG. 2(b), the first output apparatus 1 corresponds to two first charging modules: the first charging module IDA1 and the first charging module IDAn. The first output apparatus 3 corresponds to two first charging modules: the first charging module IDA1 and the first charging module IDAn. The first output apparatus m corresponds to one first charging module, namely, the first charging module IDAn. It can be learned that a quantity of first charging modules corresponding to the first output apparatus 1 is the same as a quantity of first charging modules corresponding to the first output apparatus 3. A quantity of first charging modules corresponding to the first output apparatus m is different from the quantity of first charging modules corresponding to the first output apparatus 1 (or the first output apparatus 3). In the charging system, quantities of first charging modules corresponding to two first output apparatuses are different, so that maximum power obtained by the two first output apparatuses is different.

In some examples, one first charging module may be connected to a plurality of first output apparatuses, in other words, may be connected to at least two first output apparatuses. In other words, there may be a plurality of first output apparatuses in the charging system, and first charging modules corresponding to each of the plurality of first output apparatuses include at least one same first charging module. In some examples, a first output apparatus connected to a first charging module may also mean a corresponding first output apparatus.

For example, as shown in FIG. 2(a), first charging modules corresponding to the first output apparatus 1 are the first charging module IDA1 and the first charging module IDAn. First charging modules corresponding to the first output apparatus 2 are the first charging module IDA1 and the first charging module IDAn. First charging modules corresponding to the first output apparatus 3 are the first charging module IDA1 and the first charging module IDAn. First charging modules corresponding to the first output apparatus m are the first charging module IDA1 and the first charging module IDAn. It can be learned that the first charging module IDA1 is connected to a plurality of first output apparatuses: the first output apparatus 1, the first output apparatus 2, the first output apparatus 3, and the first output apparatus m. The first output apparatus IDAn may also be connected to a plurality of first output apparatuses: the first output apparatus 1, the first output apparatus 2, the first output apparatus 3, and the first output apparatus m. An output bus of each first power converter in the first charging module IDA1 may be connected to at least one first output apparatus by using the second switch matrix. The output bus of the first power converter 1 is connected to the first output apparatus 1, the output bus of the first power converter 2 is connected to the first output apparatus 2, and the output bus of the first power converter 3 is connected to the first output apparatus 3 and the first output apparatus m. It can be learned that one first charging module may correspond to a plurality of first output apparatuses, and an output bus of each first power converter in the first charging module may be connected to at least one of the plurality of corresponding first output apparatuses. Power of the first charging module may be provided, for any first output apparatus corresponding to the first charging module by using the second switch matrix.

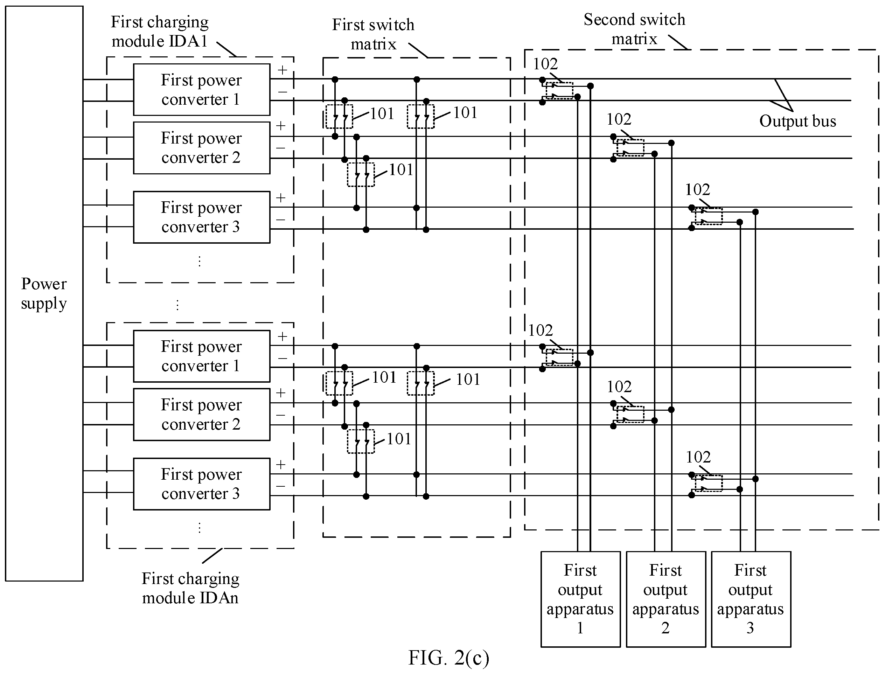

When one first charging module may correspond to a plurality of first output apparatuses, in the first charging module, a quantity of first output apparatuses connected to an output bus of each first power converter may be the same. As shown in FIG. 2(c), it is assumed that the first charging module is the first charging module IDA1. An output bus of each first power converter in the first charging module IDA1 is connected to one first output apparatus by using the second switch matrix. Different first power converters are connected to different first output apparatuses. For example, the first power converter 1 is connected to the first output apparatus 1 by using the second switch matrix, the first power converter 2 is connected to the first output apparatus 2 by using the second switch matrix, and the first power converter 3 is connected to the first output apparatus 3 by using the second switch matrix.

When one first charging module may correspond to a plurality of first output apparatuses, in the first charging module, quantities of first output apparatuses connected to output buses of different first power converters may be different. As shown in FIG. 2(a), it is assumed that the first charging module is the first charging module IDA1. The first power converter 3 in the first charging module IDA1 is connected to a plurality of first output apparatuses, such as the first output apparatus 3 and the first output apparatus m, by using the second switch matrix. The first power converter 1 in the first charging module IDA1 is connected to one first output apparatus, namely, the first output apparatus 1, by using the second switch matrix. In some examples, there may be two first power converters in the first charging module, and quantities of first output apparatuses connected to the two first power converters are different. In some other examples, quantities of first output apparatuses connected to output buses of any two first power converters may be different.

According to the foregoing descriptions of the charging system, a connection manner between the first output apparatus in the charging system and first power converters in each first charging module is flexible, and more first output apparatuses may be added in the charging system, to improve utilization of the first power converter.

The charging system architecture including the composite matrix switch provided in this application may alternatively have more forms. In a possible design, in the n first charging modules included in the charging system, a quantity of first power converters in each first charging module is a preset quantity (for example, a positive integer greater than 2). In other words, a quantity of first power converters in each first charging module is the same.

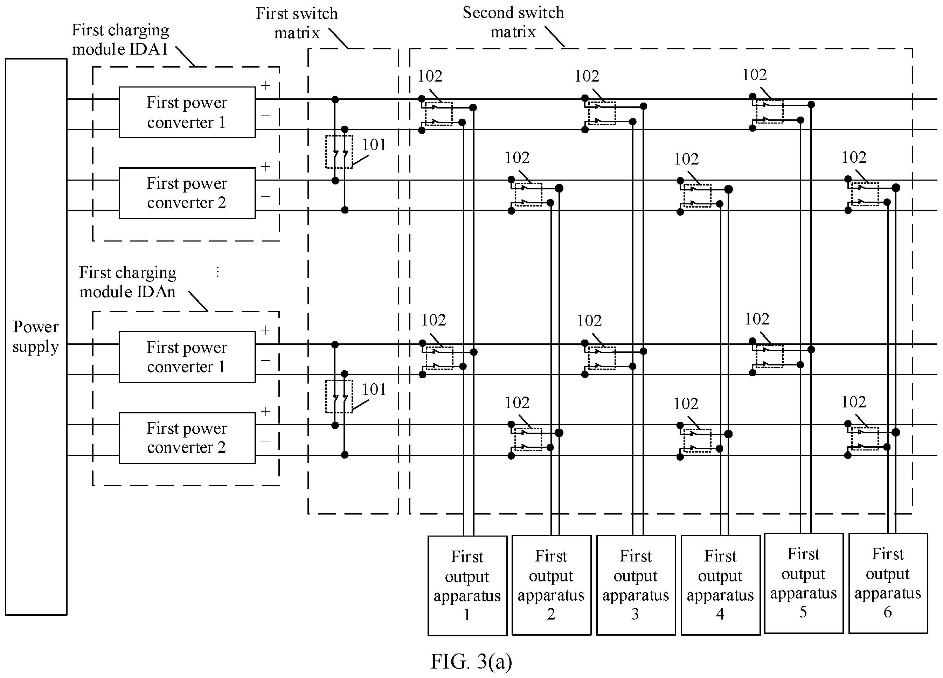

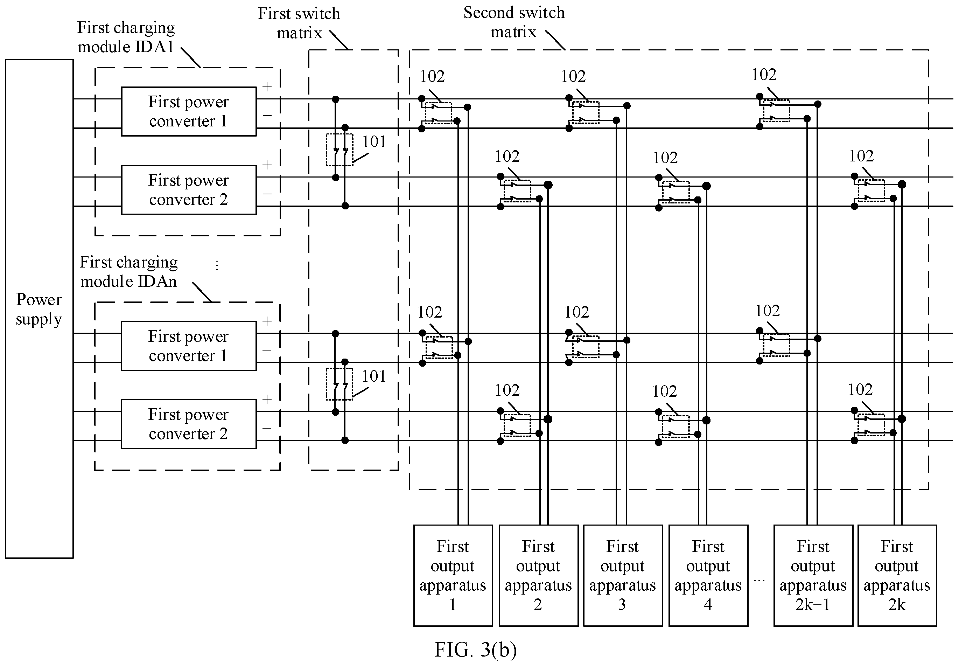

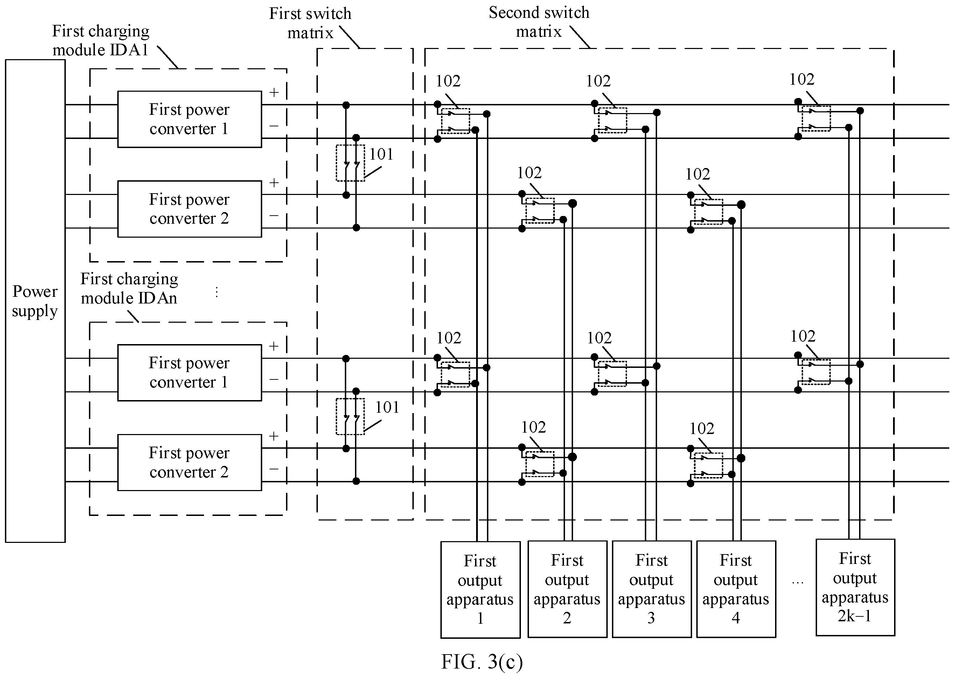

In an example, as shown in FIG. 3(a), each first charging module may include two first power converters, and a quantity of all first power converters in the charging system is 2n. The charging system may include m first output apparatuses. The charging system may be referred to as a "2n*m" dual power converter (module) composite matrix charging cabinet architecture. For example, the charging system includes six first output apparatuses and at least one first charging module, and each first charging module includes two first power converters. As shown in FIG. 3(a), such a charging system may be referred to as a "2n*6" dual module composite matrix charging cabinet unit. Optionally, as shown in FIG. 3(b), the quantity m of the first output apparatuses may be a multiple of 2, for example, m=2*k, where k is a positive integer. Optionally, as shown in FIG. 3(c), the quantity m of the first output apparatuses may be an odd number, for example, m=2*k-1, where k is a positive integer. The charging system may be referred to as a "2n*(2*k-1)" dual module composite matrix charging cabinet architecture.

Refer to FIG. 3(a) to FIG. 3(c). When each first output apparatus may correspond to all first charging modules, an embodiment of this application further provides a concept (or rule) of accessing the second switch 102. The second switch 102 may be configured to connect to a newly added first output apparatus. The second switch 102 may alternatively be configured to connect to an existing first output apparatus in the charging system. That the second switch 102 is accessed to the first charging module IDA1 is used as an example. Each time a second switch 102 is accessed to an output bus of a first power converter in the first charging module IDA1, a quantity of second switches 102 connected to an output bus of each first power converter in the first charging module IDA1 may be queried, and a newly accessed second switch 102 may be connected to an output bus of a first power converter with a smallest quantity of second switches 102.

For example, when a second switch 102 connected to a first output apparatus 4 is accessed, a quantity of second switches connected to the output bus of the first power converter 2 is 1, and a quantity of second switches connected to the output bus of the first power converter 1 is 2. The second switch 102 connected to the first output apparatus 4 may be connected to the output bus of the first power converter 2. For another example, when a second switch 102 connected to a first output apparatus 2k-1 is accessed, a quantity of second switches 102 connected to the output bus of the first power converter 1 and a quantity of second switches 102 connected to the output bus of the first power converter 2 are the same. The second switch 102 connected to the first output apparatus 2k-1 may be connected to any one of the output bus of the first power converter 1 and the output bus of the first power converter 2.

In some examples, the second switch 102 may be accessed in a polling manner. When one second switch 102 is accessed in a current time, a first power converter connected to the second switch 102 accessed this time is a first power converter in a next order of a first power converter connected to a second switch 102 accessed in a previous time. For example, in the first charging module IDA1, a first power converter in a next order of the first power converter 1 is the first power converter 2. A first power converter in a next order of the first power converter 2 is the first power converter 1. When a second switch 102 newly added in the previous time is accessed, the second switch 102 is connected to the output bus of the first power converter 1. When a second switch 102 newly added in the current time is accessed, the second switch 102 is connected to the output bus of the first power converter 2. When a second switch 102 newly added in a next time is accessed, the second switch 102 is connected to the output bus of the first power converter 1. It can be learned that, when second switches 102 in the charging system are accessed, first power converters may be accessed to the second switches 102 one by one according to an order of the first power converters in the first charging module.

Based on that the second switch 102 may be accessed in the polling manner, an embodiment of this application further provides a concept of power allocation or scheduling control. Refer to FIG. 3(a) to FIG. 3(c). Each first output apparatus corresponds to all first charging modules. When each first charging module includes two first power converters, two first output apparatuses are used as a granularity of power control. For example, the first output apparatus 2k-1 and a first output apparatus 2k is one granularity. When the charging system includes 2k first output apparatuses, the charging system may be divided into k granularities, and each granularity includes two first output apparatuses. When the charging system includes 2k-1 first output apparatuses, the charging system may also be divided into k granularities. A last granularity includes only one first output apparatus, namely, the first output apparatus 2k-1. Another granularity includes two first output apparatuses.

When on-off statuses of second switches 102 connected to first output apparatuses in granularities are different, working conditions of the granularities are different. For example, when both second switches 102 connected to first output apparatuses are in an on state, the granularity is in a first working condition. Alternatively, when both second switches 102 connected to first output apparatuses are in an off state, the granularity is in a second working condition.

Alternatively, when a second switch 102 connected to the first output apparatus 2k-1 is in an on state, and a second switch 102 connected to the first output apparatus 2k is in an off state, the granularity is in a third working condition. Alternatively, when a second switch 102 connected to the first output apparatus 2k is in an on state, and a second switch 102 connected to the first output apparatus 2k-1 is in an off state, the granularity is in a fourth working condition. Optionally, the third working condition and the fourth working condition may be a same working condition. In other words, a working condition of a same granularity is related to on-off statuses of second switches 102 connected to first output apparatuses in the granularity.

When performing power allocation or scheduling on any first charging module, the control module may perform scheduling based on a working condition of each granularity. When performing power allocation or scheduling for a first output apparatus in any granularity, the control module may perform scheduling based on a working condition of the granularity.

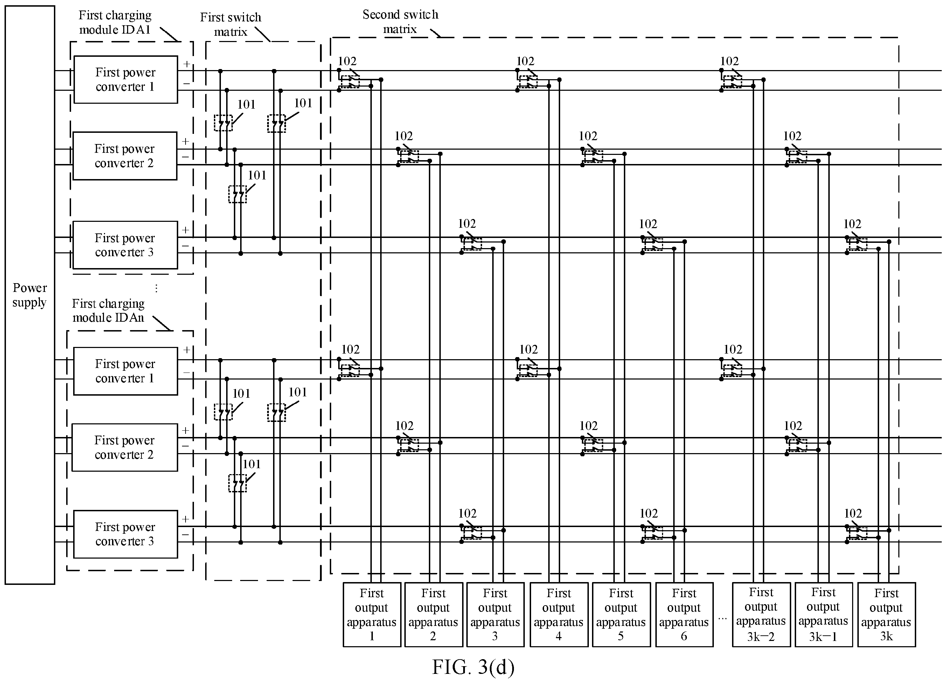

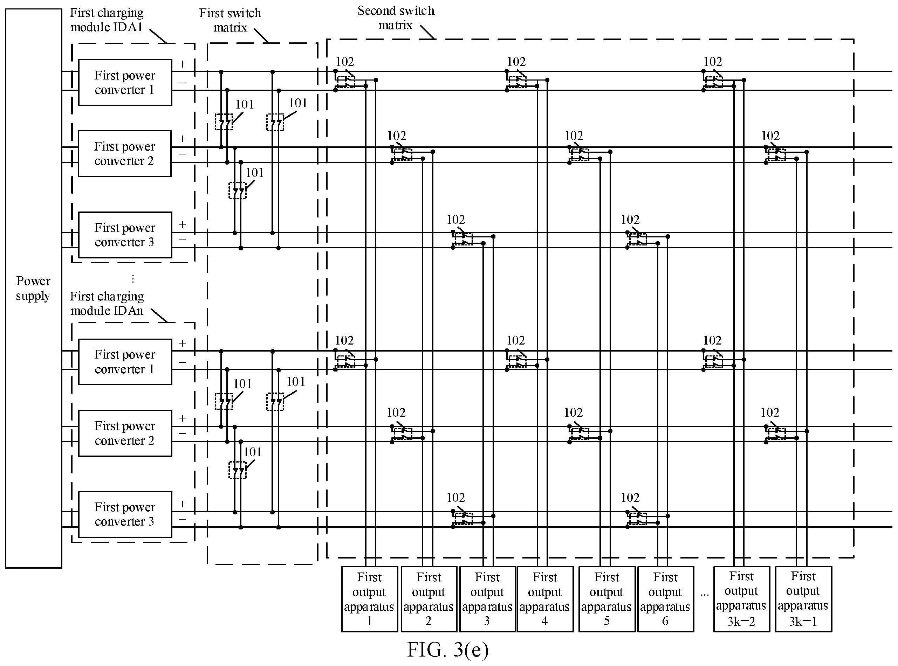

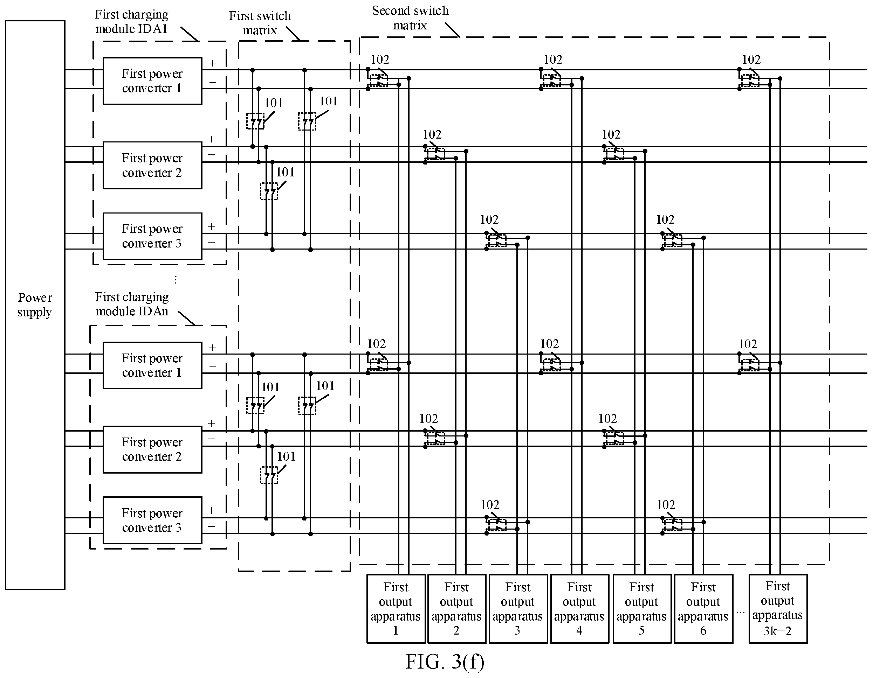

In another example, as shown in FIG. 3(d), the charging system includes n first charging modules, and each first charging module may include three first power converters. In this case, a quantity of all first power converters in the charging system is 3n. The charging system may include m first output apparatuses. The charging system may be referred to as a "3n*m" three module composite matrix charging cabinet architecture. Optionally, the quantity m of the first output apparatuses may be a multiple of 3, for example, m=3 *k, where k may be a positive integer. Optionally, as shown in FIG. 3(e), the quantity m of the first output apparatuses may be 3k-1, where k is a positive integer. The charging system may be referred to as a "3n* (3*k-1)" three module composite matrix charging cabinet architecture. Optionally, as shown in FIG. 3(f), the quantity m of the first output apparatuses may be 3k-2, where k is a positive integer. The charging system may be referred to as a "3n* (3*k-2)" three module composite matrix charging cabinet architecture.

With reference to the foregoing concept of accessing the second switch 102 in the polling manner and the concept of power allocation or scheduling control, an embodiment of this application further provides a concept of power allocation or scheduling control. Refer to FIG. 3 (d) to FIG. 3 (f). Each first output apparatus corresponds to all first charging modules, and when each first charging module includes three first power converters, three first output apparatuses may be used as a granularity of power control. When the charging system includes 3k first output apparatuses, the charging system may be divided into k granularities, and each granularity includes three first output apparatuses. When the charging system includes 3k-1 first output apparatuses, the charging system may also be divided into k granularities. A last granularity includes only two first output apparatuses, namely, a first output apparatus 3k-1 and a first output apparatus 3k-2. Another granularity includes three first output apparatuses. When the charging system includes 3k-2 first output apparatuses, the charging system may also be divided into k granularities. A last granularity includes only one first output apparatus, namely, the first output apparatus 3k-1. Another granularity includes three first output apparatuses.

When performing power allocation or scheduling on any first charging module, the control module may perform scheduling based on a working condition of each granularity. When performing power allocation or scheduling for a first output apparatus in any granularity, the control module may perform scheduling based on a working condition of the granularity.

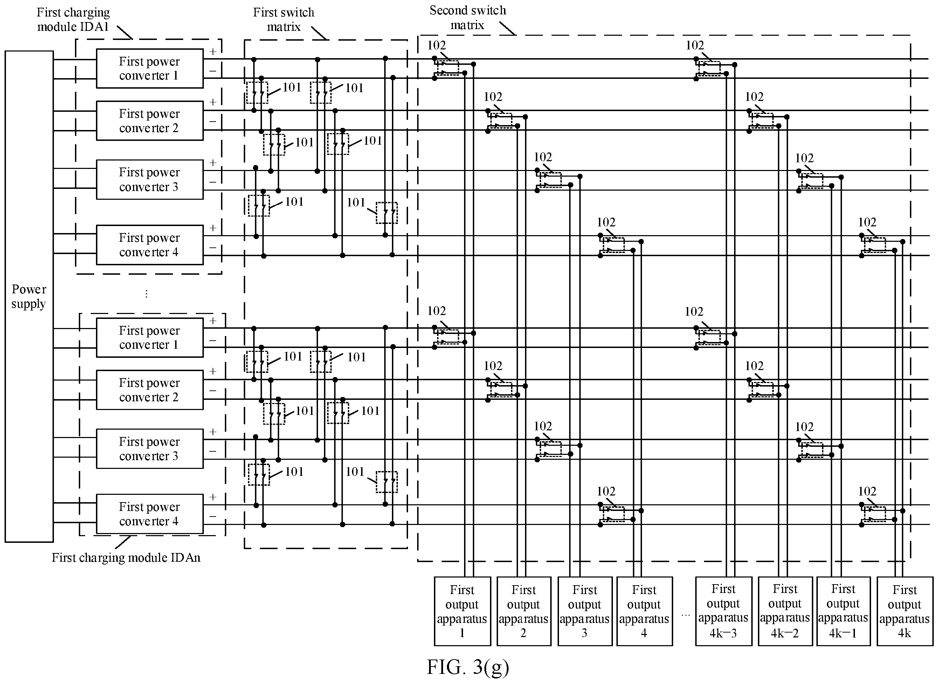

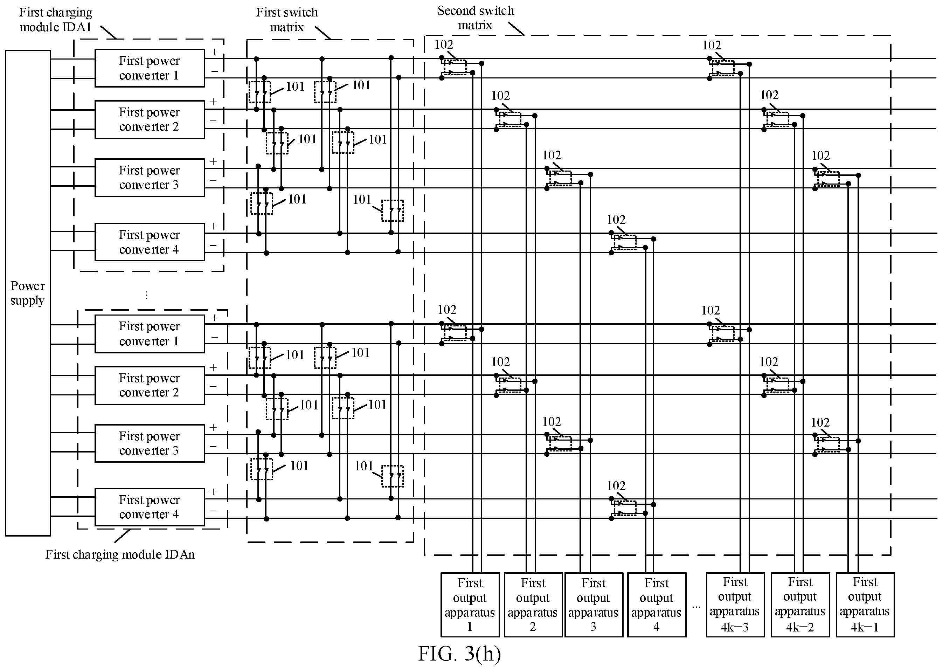

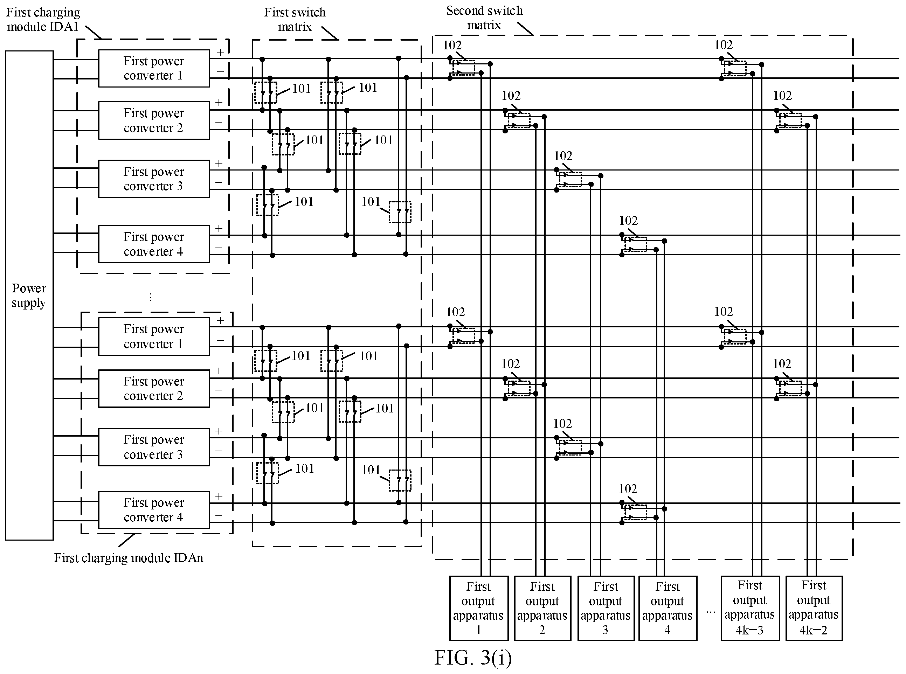

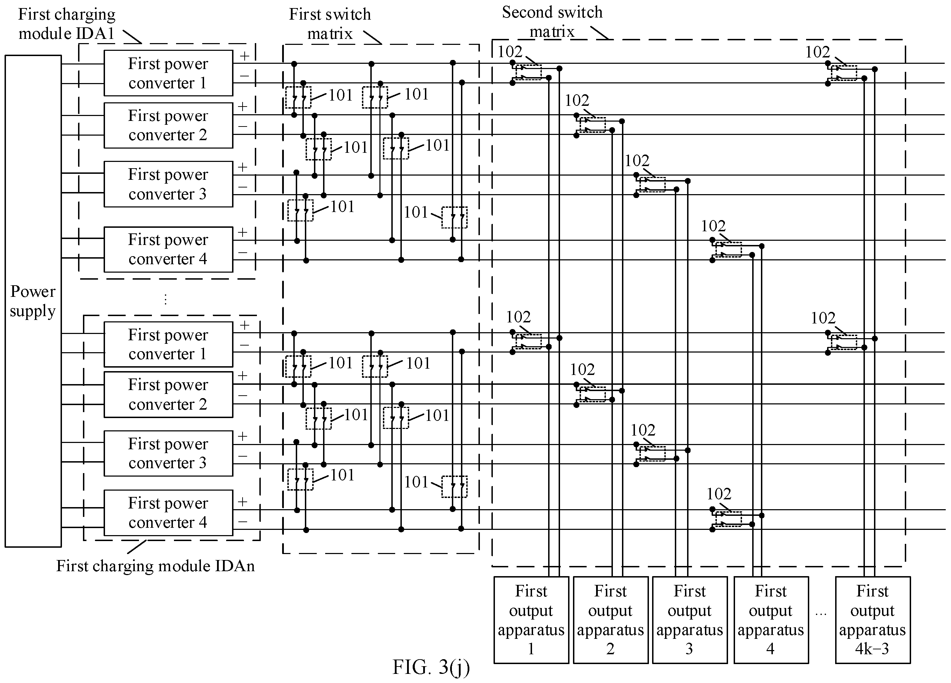

In still another example, as shown in FIG. 3(g), the charging system includes n first charging modules, and each first charging module may include four first power converters. In this case, a quantity of all first power converters in the charging system is 4n. The charging system may include m first output apparatuses. The charging system may be referred to as a "4n*m" three module composite matrix charging cabinet architecture. Optionally, the quantity m of the first output apparatuses may be a multiple of 4, for example, m=4*k, where k may be a positive integer. Optionally, as shown in FIG. 3(h), the quantity m of the first output apparatuses may be 4k-1, where k is a positive integer. The charging system may be referred to as a "4n* (4*k-1)" four module composite matrix charging cabinet architecture. Optionally, as shown in FIG. 3(i), the quantity m of the first output apparatuses may be 4k-2, where k is a positive integer. The charging system may be referred to as a "4n* (4*k-2)" four module composite matrix charging cabinet architecture. Optionally, as shown in FIG. 3(j), the quantity m of the first output apparatuses may be 4k-3, where k is a positive integer. The charging system may be referred to as a "4n* (4*k-3)" four module composite matrix charging cabinet architecture.

With reference to the foregoing concept of accessing the second switch 102 in the polling manner and the concept of power allocation or scheduling control, an embodiment of this application further provides a concept of power allocation or scheduling control. Refer to FIG. 3(g) to FIG. 3(i). Each first output apparatus corresponds to all first charging modules, and when each first charging module includes four first power converters, four first output apparatuses may be used as a granularity of power control. When the charging system includes 4k first output apparatuses, the charging system may be divided into k granularities, and each granularity includes four first output apparatuses. When the charging system includes 4k-1 first output apparatuses, the charging system may also be divided into k granularities. A last granularity includes only three first output apparatuses, namely, a first output apparatus 4k-1, a first output apparatus 4k-2, and a first output apparatus 4k-3. Another granularity includes four first output apparatuses. When the charging system includes 4k-2 first output apparatuses, the charging system may also be divided into k granularities. A last granularity includes only two first output apparatuses, namely, the first output apparatus 4k-1 and the first output apparatus 4k-2. Another granularity includes four first output apparatuses. When the charging system includes 4k-3 first output apparatuses, the charging system may also be divided into k granularities. A last granularity includes only one first output apparatus, namely, the first output apparatus 4k-1. Another granularity includes four first output apparatuses.

When performing power allocation or scheduling on any first charging module, the control module may perform scheduling based on a working condition of each granularity. When performing power allocation or scheduling for a first output apparatus in any granularity, the control module may perform scheduling based on a working condition of the granularity.

It can be learned that the charging system may include n first charging modules, and each first charging module may include q first power converters. In this case, a quantity of all first power converters in the charging system is qn. If a quantity of all the first output apparatuses in the charging system is m, the charging system may be referred to as a "qn*m" q-module composite matrix charging cabinet architecture. It can be learned that an architecture that includes a composite matrix charging system provided in this application may include a plurality of multi-module composite matrix charging cabinet architectures. This is not enumerated one by one herein. With reference to the foregoing concept of accessing the second switch 102 in the polling manner and the concept of power allocation or scheduling control, each first output apparatus corresponds to all first charging modules, and when each first charging module includes q first power converters, q first output apparatuses may be used as a granularity of power control. When performing power allocation or scheduling on any first charging module, the control module may perform scheduling based on a working condition of each granularity. When performing power allocation or scheduling for a first output apparatus in any granularity, the control module may perform scheduling based on a working condition of the granularity.

In a possible design, the charging system may include n first charging modules. There are two first charging modules, and quantities of first power converters in the first charging modules may be different. For example, the n first charging modules include a first charging module IDA1 and a first charging module IDA2. The first charging module IDA1 may include q1 first power converters, and the first charging module IDA2 may include q2 first power converters, where q1 and q2 may be different values.

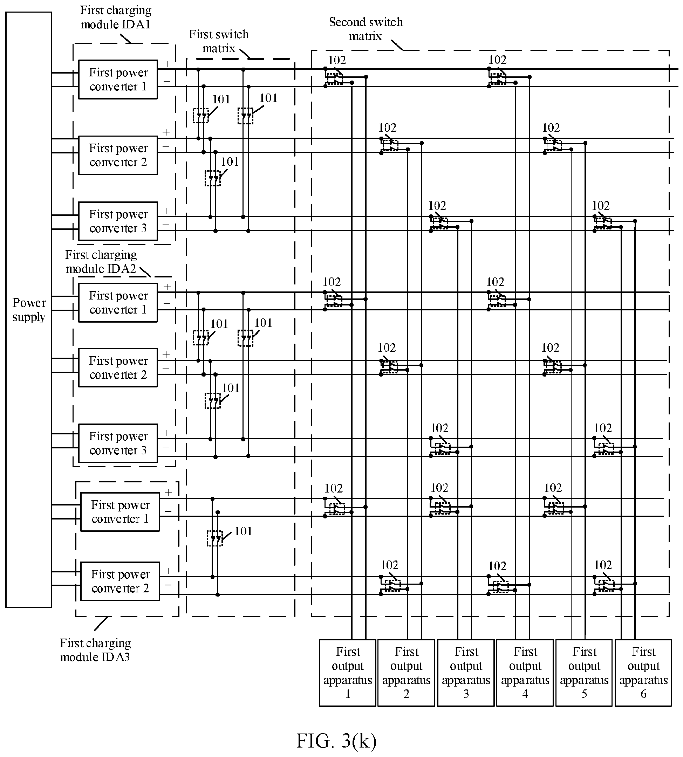

Refer to FIG. 3(k). It is assumed that n is equal to 3, in other words, the charging system includes three first charging modules. The first charging module IDA1 includes three first power converters, the first charging module IDA2 includes three first power converters, and a first charging module 3 includes two first power converters. In this example, a quantity of all first power converters in the charging system is 8.

When quantities of first power converters in first charging modules are the same or different, one first output apparatus in the charging system may also have at least one corresponding first charging module. For a manner of connecting each first output apparatus to the at least one corresponding first charging module by using the second switch matrix, refer to the foregoing embodiments. Details are not described herein again. One first charging module may also have at least one corresponding first output apparatus. For a manner of connecting each first charging module to the at least one corresponding first output apparatus by using the second switch matrix, refer to the foregoing embodiments. Details are not described herein again. For a connection relationship between each first charging module and the first switch in the first switch matrix, refer to the foregoing embodiments. Details are not described herein again.

In an actual application scenario, quantities of first charging modules are different in different charging systems, and total quantities of first power converters in the charging systems may be the same.

Refer to FIG. 3(1), a charging system 1 may include four first charging modules, each first charging module may include two first power converters, and a total quantity of first power converters in the charging system 1 is 8. The charging system 1 may be referred to as an "8*m" two module composite matrix charging cabinet architecture. Refer to FIG. 3(m). A charging system 2 may include two first charging modules, each first charging module may include four first power converters, and a total quantity of first power converters in the charging system 2 is 8. The charging system 2 may be referred to as an "8*m" four module composite matrix charging cabinet architecture. The charging system shown in FIG. 3(k) includes three first charging modules, eight first power converters in total, and six first output apparatuses. The charging system may be referred to as an "8*6" composite matrix charging cabinet architecture. It can be learned that for different charging systems, a quantity of first charging modules and a quantity of first power converters in each first charging module may be adjusted, so that a total quantity of first power converters in each charging system is the same. Therefore, it can be learned that the charging system architecture provided in this application is flexible.

In the charging system provided in embodiments of this application, a larger quantity of first charging modules corresponding to one first output apparatus indicates higher maximum power that can be obtained. Refer to FIG. 3(n). The charging system includes three first charging modules, and each first charging module includes two first power converters. The first output apparatus 1 corresponds to two first charging modules: the first charging module IDA1 and the first charging module IDA2. Similarly, the first output apparatus 2 to the first output apparatus 4 correspond to the first charging module IDA1 and the first charging module IDA2. A first output apparatus 5 corresponds to one first charging module, namely, the first charging module 3. A first output apparatus 6 corresponds to one first charging module, namely, the first charging module 3.

In the first output apparatus 1 to the first output apparatus 4, each first output apparatus can obtain power of at most four first power converters. In the first output apparatus 5 and the first output apparatus 6, each first output apparatus can obtain power of at most two first power converters. The first output apparatuses 1 to the first output apparatus 4 may be referred to as first output apparatuses in a high power region. The first output apparatus 5 and the first output apparatus 6 may be referred to as first output apparatuses in a low power region. It can be learned that, different first output apparatuses in the charging system may provide different maximum output power for the power-consuming device. A first charging module corresponding to each first output apparatus may be determined based on preset maximum output power of each first output apparatus.

Based on the charging system architecture provided in the foregoing embodiments, a charging module that provides fixed power for the output apparatus may be added, and is denoted as a second charging module. Different from the first charging module, the second charging module may mean a charging module that is not connected to the first switch matrix. The charging system may include s second charging modules, where s is a positive integer greater than 1. Each second charging module may have an identification, and identifications IDs of the s second charging modules may be respectively denoted as an identification IDB1, an identification IDB2, ..., and an identification IDBs. The identification of the second charging module may include one or more of a number, a character, a character, or the like. As shown in FIG. 4(a), the identification IDB1 of the second charging module may mean a second charging module IDB1. Similarly, the identification IDBs of the second charging module may mean a second charging module IDBs.

Each second charging module may include at least one second power converter. Each second power converter has one output bus, the output bus of each second power converter is connected to the second switch matrix, and the second power converter is configured to output electric energy. The power supply is connected to an input side of each second power converter, and the power supply is configured to provide electric energy, for example, direct current power or alternating current power, for each second power converter. Each second power converter may process the electric energy provided by the power supply. For example, the second power converter may convert a direct current to an alternating current, a direct current to a direct current, an alternating current to a direct current, or an alternating current to an alternating current. For another example, the second power converter may perform boost processing, buck processing, or the like on the electric energy provided by the power supply. Each second power converter outputs electric energy, for example, power, through an output bus. An output bus of each second power converter is connected to the first switch matrix. As shown in FIG. 4(a), each second power converter has one output bus. In some examples, when the second power converter has a capability of converting an alternating current to an alternating current or converting a direct current to an alternating current, the second power converter has one output bus. In some examples, when the second power converter has a capability of converting a direct current to a direct current or converting an alternating current to a direct current, the output bus of the second power converter may include a positive bus and a negative bus. For ease of description, an example in which the second power converter has a capability of converting a direct current to a direct current or converting an alternating current to a direct current is used in the following for description.

The first output apparatus j may be connected to a corresponding second charging module by using the second switch matrix. The second switch matrix is further configured to transmit, to the first output apparatus j, electric energy on an output bus of a second power converter in any second charging module corresponding to the first output apparatus j.

The second switch matrix may include a plurality of third switches 103. The first output apparatus j corresponds to y second charging modules, and y is a positive integer not greater than s. For ease of description, in this application, a k^{th} second charging module in the y second charging modules corresponding to the first output apparatus j may be denoted as a second charging module (k, j), where 1≤k≤y. Quantities of second charging modules corresponding to first output apparatuses are the same or different. The first output apparatus j is connected to the y corresponding second charging modules by using y third switches 103. A third switch 103 (k, j) in the y third switches 103 is connected to an output bus of a second power converter in the second charging module (k, j), and is connected to the first output apparatus j. When the third switch 103 (k, j) is in an on state, electric energy on the output bus of the second power converter in the second charging module (k, j) is transmitted to the first output apparatus j.

As shown in FIG. 4(b), second charging modules corresponding to the first output apparatus 1 are the second charging module IDB1 and the second charging module IDBs in sequence. A 1^{st} second charging module corresponding to the first output apparatus 1 is a second charging module (1, 1), and the second charging module (1, 1) is also the second charging module IDB1. Second charging modules corresponding to the first output apparatus 2 are the second charging module IDA1 and the second charging module IDBs. A 1^{st} second charging module corresponding to the first output apparatus 2 is a second charging module (1, 2), and the second charging module (1, 2) is also the second charging module IDB 1. It is clear that the second charging module (k, j) in this application refers to the k^{th} second charging module in the second charging modules corresponding to the first output apparatus j, and is obviously different from a second charging module IDBk with an identification of IDBk.

As shown in FIG. 4(b), it is assumed that j is equal to 1. The first output apparatus 1 corresponds to two second charging modules: the second charging module IDB1 and the second charging module IDBs. In the second charging modules corresponding to the first output apparatus 1, the 1^{st} second charging module is denoted as the second charging module (1, 1), and is also the first charging module IDB1. A 2^{nd} second charging module is denoted as a second charging module (2, 1), and is also the second charging module IDBs. A third switch 103 connected to the second charging module (1, 1) and connected to the first output apparatus 1 may be denoted as a third switch 103 (1, 1). A third switch 103 connected to the second charging module (1, 1) and connected to the first output apparatus 1 may be denoted as a third switch 103 (2, 1). When the third switch 103 (1, 1) is in an on state, electric energy on an output bus of a second power converter in the second charging module IDB1 may be transmitted to the first output apparatus 1. When the third switch 103 (2, 1) is in an on state, electric energy on an output bus of a second power converter in the second charging module IDBs may be transmitted to the first output apparatus 1. It can be learned that in the charging system, the control module may control the third switch 103 (1, 1) and the third switch 103 (2, 1) in a third switch matrix, so that the first output apparatus 1 can obtain power of the second charging module IDB 1 and the second charging module IDBs. Power of different second charging modules is flexibly scheduled to a same first output apparatus.

The second charging module is added to the charging system, and electric energy output by the second power converter in the second charging module may be provided for the first output apparatus by controlling the second switch matrix. Such a design improves scalability of the charging system and flexibility of power allocation.

In some examples, in the charging system, each first output apparatus corresponds to a same quantity of second charging modules. As shown in FIG. 4(a), a second charging module corresponding to the first output apparatus 1 is the second charging module IDB 1, a second charging module corresponding to the first output apparatus 2 is the second charging module IDB1, a second charging module corresponding to the first output apparatus 3 is the second charging module IDBs, and a second charging module corresponding to the first output apparatus m is the second charging module IDBs. It can be learned that each first output apparatus corresponds to one second charging module, and is connected to one second power converter in the corresponding second charging module by using the second switch matrix. In this example, each first output apparatus may obtain power of one connected second power converter by using the second switch matrix.

As shown in FIG. 4(b), each first output apparatus corresponds to a same quantity of second charging modules, and the quantity is greater than 1. Second charging modules corresponding to the first output apparatus 1 include the second charging module IDB1 and the second charging module IDBs, second charging modules corresponding to the first output apparatus 2 include the second charging module IDB1 and the second charging module IDBs, second charging modules corresponding to the first output apparatus 3 include the second charging module IDB 1 and the second charging module IDBs, and second charging modules corresponding to the first output apparatus m include the second charging module IDB1 and the second charging module IDBs. It can be learned that each first output apparatus corresponds to two second charging modules, and is connected to one second power converter in each corresponding second charging module by using the second switch matrix. In this example, each first output apparatus may obtain power of two connected second power converters by using the second switch matrix.

In some other examples, one second charging module may be connected to a plurality of first output apparatuses, that is, connected to at least two first output apparatuses. In other words, there may be a plurality of first output apparatuses in the charging system, and second charging modules corresponding to each of the plurality of first output apparatuses may include at least one same second charging module. In the same second charging module, an output bus of each second power converter is connected to at least one of the plurality of first output apparatuses by using the second switch matrix.

For example, as shown in FIG. 4(b), the second charging modules corresponding to the first output apparatus 1 are the second charging module IDB 1 and the second charging module IDBs. The second charging modules corresponding to the first output apparatus 2 are the second charging module IDB 1 and the second charging module IDBs. The second charging modules corresponding to the first output apparatus 3 are the second charging module IDB 1 and the second charging module IDBs. The second charging modules corresponding to the first output apparatus m are the second charging module IDB 1 and the second charging module IDBs. It can be learned that the second charging module IDB 1 is connected to a plurality of first output apparatuses: the first output apparatus 1, the first output apparatus 2, the first output apparatus 3, and the first output apparatus m. The second charging module IDBs are connected to a plurality of first output apparatuses: the first output apparatus 1, the first output apparatus 2, the first output apparatus 3, and the first output apparatus m.

An output bus of each second power converter in the second charging module IDB 1 may be connected to at least one first output apparatus by using the second switch matrix. An output bus of a second power converter 1 is connected to the first output apparatus 1, an output bus of a second power converter 2 is connected to the first output apparatus 2, and an output bus of a second power converter 3 is connected to the first output apparatus 3 and the first output apparatus m. It can be learned that one second charging module may correspond to a plurality of first output apparatuses. An output bus of each second power converter in the second charging module may be connected to at least one first output apparatus in the plurality of corresponding first output apparatuses. Power of the second charging module may be provided for any first output apparatus corresponding to the second charging module by using the second switch matrix.

When one second charging module may correspond to a plurality of first output apparatuses, in the second charging module, a quantity of first output apparatuses connected to an output bus of each second power converter may be the same. As shown in FIG. 4(b), it is assumed that the second charging module is the second charging module IDB1. An output bus of each second power converter in the second charging module IDB1 is connected to two first output apparatuses by using the second switch matrix. Different second power converters are connected to different first output apparatuses. For example, the second power converter 1 in the second charging module IDB 1 is connected to the first output apparatus 1 and the first output apparatus 3 by using the second switch matrix, and the second power converter 2 is connected to the first output apparatus 2 and the first output apparatus m by using the second switch matrix.

When one second charging module may correspond to a plurality of first output apparatuses, in the second charging module, quantities of first output apparatuses connected to output buses of different second power converters may be different. As shown in FIG. 4(c), it is assumed that the second charging module is the second charging module IDB 1. The second power converter 1 in the second charging module IDB1 is connected to a plurality of first output apparatuses, such as the first output apparatus 1 and the first output apparatus 3, by using the second switch matrix. The second power converter 2 in the second charging module IDB 1 is connected to one first output apparatus, namely, the first output apparatus 2, by using the second switch matrix. In some examples, there may be two second power converters in the second charging module, and quantities of first output apparatuses connected to the two second power converters are different. In some other examples, quantities of first output apparatuses connected to output buses of any two second power converters in the second charging module may be different.

In a possible scenario, the charging system may include a plurality of first charging modules and one second charging module. Refer to FIG. 4(d). The plurality of first charging modules are the first charging module IDA1 and the first charging module IDA2. The first charging module IDA1 includes four first power converters, and the first charging module IDA2 includes two first power converters. The second charging module is the second charging module IDB 1, and the second charging module IDB 1 includes one second power converter. Each first output apparatus corresponds to the second charging module IDB1, and each first output apparatus is connected to the output bus of the second power converter 1 by using the second switch matrix. In the charging system, a total quantity of first power converters and second power converters is 8, and a quantity of first output apparatuses is 6. The charging system may be referred to as an "8*6" composite matrix charging cabinet architecture. With reference to the charging system shown in FIG. 3(k), the charging system shown in FIG. 3(1), and the charging system shown in FIG. 3(m) in the foregoing embodiments, total quantities of power converters included in different charging systems may be the same by adjusting a quantity of first charging modules, adjusting a quantity of first power converters in each first charging module, adjusting a quantity of second charging modules, or adjusting a quantity of second power converters in the second charging module.

In a possible scenario, as shown in FIG. 6(a), the charging system may include p second output apparatuses, and p is a positive integer. The second output apparatus in the charging system may be an apparatus, for example, a charger or a charging column. The power-consuming device may obtain electric energy by using the second output apparatus, and the power-consuming device may be an electric vehicle. For ease of distinguishing, in embodiments of this application, an output apparatus connected to only the second charging module is denoted as the second output apparatus. Different from the first output apparatus, the second output apparatus is an output apparatus that is not connected to the first charging module.

An a^{th} second output apparatus in the p second output apparatuses may be denoted as a second output apparatus a, where 1≤a≤p. The second output apparatus a is connected to a corresponding second charging module by using the second switch matrix, and the second switch matrix is further configured to transmit, to the second output apparatus a, electric energy output by any second charging module corresponding to the second output apparatus a.

In a possible implementation, the second charging module may be connected to the first output apparatus and the second output apparatus by using the second switch matrix. In other words, second charging modules corresponding to the first output apparatus and second charging modules corresponding to the second output apparatus include a same second charging module. As shown in FIG. 5(a), the second charging module IDB1 may correspond to the first output apparatus 1, the first output apparatus 2, the first output apparatus m, a second output apparatus 1, and a second output apparatus p.

In some examples, when one second charging module corresponds to a plurality of second charging modules, an output bus of each second power converter in the second charging module may be connected to at least one second output apparatus. As shown in FIG. 5(a), in each second charging module, an output bus of each second power converter is connected to one second output apparatus. As shown in FIG. 5(b), in each second charging module, an output bus of each second power converter is connected to two second output apparatuses.

In another possible implementation, in the charging system, as shown in FIG. 6(a), an output bus of a second power converter in the second charging module may be connected to only the second output apparatus by using the second switch matrix, and cannot be connected to the first output apparatus. For ease of differentiation, a switch disposed between the second power converter and the second output apparatus in this case is denoted as a fourth switch 104. The second switch matrix may include a plurality of fourth switches 104. Each second charging module includes a plurality of second power converters. The second output apparatus a corresponds to z second charging modules, z is a positive integer not greater than s, and an r^{th} second charging module in the z second charging modules is a second charging module (r, a), where 1≤r≤z. Quantities of second charging modules corresponding to second output apparatuses are the same or different. The second output apparatus a is connected to the z corresponding second charging modules by using z fourth switches 104. A fourth switch 104 (r, a) in the z fourth switches 104 is connected to an output bus of a second power converter in the second charging module (r, a), and is connected to the second output apparatus a. When the fourth switch 104 (r, a) is in an on state, electric energy on the output bus of the second power converter in the second charging module (r, a) is transmitted to the second output apparatus a.

As shown in FIG. 6(b), it is assumed that a is equal to 1. The second output apparatus 1 corresponds to two second charging modules: the second charging module IDB1 and the second charging module IDBs. A 1^{st} second charging module in the two second charging modules corresponding to the second output apparatus 1 is denoted as a second charging module (1, 1), and is also the second charging module IDB 1. A 2^{nd} second charging module is denoted as a second charging module (2, 1), and is also the second charging module IDBs. A fourth switch 104 connected to the second charging module IDB1 and connected to the second output apparatus 1 may be denoted as a fourth switch 104 (1, 1). A fourth switch 104 connected to a first charging module n and connected to the second output apparatus 1 may be denoted as a fourth switch 104 (2, 1). When the fourth switch 104 (1, 1) is in an on state, electric energy on an output bus of one second power converter in the second charging module (1, 1) may be transmitted to the second output apparatus 1. When the fourth switch 104 (2, 1) is in an on state, electric energy on an output bus of one second power converter in the second charging module (2, 1) may be transmitted to the second output apparatus 1. It can be learned that in the charging system, the control module may control the fourth switch 104 (1, 1) and the fourth switch 104 (2, 1) in the fourth switch matrix, so that the second output apparatus 1 can obtain power of the second charging module IDB1 and the second charging module IDBs. Power of different second charging modules is flexibly scheduled to a same second output apparatus.

In some examples, in the charging system, each second output apparatus corresponds to a same quantity of second charging modules. As shown in FIG. 6(a), a second charging module corresponding to the second output apparatus 1 is the second charging module IDB1, a second charging module corresponding to the second output apparatus 2 is the second charging module IDB 1, a second charging module corresponding to the second output apparatus 3 is the second charging module IDBs, and a second charging module corresponding to the second output apparatus p is the second charging module IDBs. It can be learned that each second output apparatus corresponds to one second charging module, and is connected to one second power converter in the corresponding second charging module by using the second switch matrix. In this example, each second output apparatus may obtain power of one connected second power converter by using the second switch matrix.

Each second output apparatus corresponds to a same quantity of second charging modules, and the quantity is greater than 1. As shown in FIG. 6(b), second charging modules corresponding to the second output apparatus 1 include the second charging module IDB 1 and the second charging module IDBs, second charging modules corresponding to the second output apparatus 2 include the second charging module IDB 1 and the second charging module IDBs, second charging modules corresponding to the second output apparatus 3 include the second charging module IDB1 and the second charging module IDBs, and second charging modules corresponding to the second output apparatus p include the second charging module IDB1 and the second charging module IDBs. It can be learned that each second output apparatus corresponds to two second charging modules, and the second output apparatus is connected to one second power converter in each corresponding second charging module by using the second switch matrix. In this example, each second output apparatus may obtain power of two connected second power converters by using the second switch matrix.

In some other examples, one second charging module may be connected to a plurality of second output apparatuses, in other words, connected to at least two output apparatuses. In other words, there may be a plurality of second output apparatuses in the charging system, and second charging modules corresponding to each of the plurality of second output apparatuses include at least one same second charging module. An output bus of each second power converter in the second charging module is connected to at least one of the plurality of second output apparatuses by using the second switch matrix.

For example, as shown in FIG. 6(b), the second charging modules corresponding to the second output apparatus 1 are the second charging module IDB 1 and the second charging module IDBs. The second charging modules corresponding to the second output apparatus 2 are the second charging module IDB1 and the second charging module IDBs. The second charging modules corresponding to the second output apparatus 3 are the second charging module IDB1 and the second charging module IDBs. The second charging modules corresponding to the second output apparatus p are the second charging module IDB1 and the second charging module IDBs. It can be learned that the second charging module IDB1 may be connected to the second output apparatus 1, the second output apparatus 2, the second output apparatus 3, and the second output apparatus p. The second charging module IDBs may be connected to the second output apparatus 1, the second output apparatus 2, the second output apparatus 3, and the second output apparatus p. The second charging module IDB 1 is used as an example. An output bus of each second power converter in the second charging module IDB 1 is connected to at least one second output apparatus by using the second switch matrix. The output bus of the second power converter 1 is connected to the second output apparatus 1 and the second output apparatus 3, and the output bus of the second power converter 2 is connected to the second output apparatus 2 and the second output apparatus p.

It can be learned that one second charging module may correspond to a plurality of second output apparatuses, and an output bus of each second power converter in the second charging module may be connected to at least one of the plurality of corresponding second output apparatuses. The power of the second charging module may be provided for any second output apparatus corresponding to the second charging module by using the second switch matrix.

When one second charging module may correspond to a plurality of second output apparatuses, in the second charging module, a quantity of second output apparatuses connected to an output bus of each second power converter may be the same. As shown in FIG. 6(b), it is assumed that the second charging module is the second charging module IDB1. An output bus of each second power converter in the second charging module IDB 1 is connected to two second output apparatuses by using the second switch matrix. Different second power converters are connected to different second output apparatuses. For example, the second power converter 1 is connected to the second output apparatus 1 and the second output apparatus 3 by using the second switch matrix, and the second power converter 2 is connected to the second output apparatus 2 and the second output apparatus p by using the second switch matrix.

When one second charging module may correspond to a plurality of second output apparatuses, in the second charging module, quantities of second output apparatuses connected to output buses of different second power converters may be different. As shown in FIG. 6(c), it is assumed that the second charging module is the second charging module IDB 1. The second power converter 2 in the second charging module IDB 1 is connected to a plurality of second output apparatuses, such as the second output apparatus 2 and the second output apparatus p, by using the second switch matrix. The second power converter 1 in the second charging module IDB1 is connected to one second output apparatus, namely, the second output apparatus 1, by using the second switch matrix. In some examples, there may be two second power converters in the second charging module, and quantities of second output apparatuses connected to the two second power converters are different. In some other examples, quantities of second output apparatuses connected to output buses of any two second power converters in the second charging module may be different.

In a possible design, second charging modules corresponding to all second output apparatuses may be the same, and each second power converter in each second charging module is connected to all second output apparatuses by using the second switch matrix. As shown in FIG. 6(d), it is assumed that each second charging module includes one second power converter, and the second power converter is connected to a plurality of fourth switches 104. The plurality of fourth switches 104 are in a one-to-one correspondence with all second output apparatuses. In such a design, all fourth switches 104 connected to output buses of all second power converters may constitute a full matrix switching switch. It can be learned that the charging system provided in this example of this application may include a composite switching matrix charging cabinet and a full matrix switching matrix charging cabinet. The charging system may be referred to as a combined matrix charging cabinet architecture.

In this embodiment, the second power converter in the second charging module is connected to only the second charging apparatus by using the second switch matrix. The output bus of the second power converter in the second charging module is not connected to the first switch matrix. In such a design, the second charging module is in a default state of the first switch matrix. Electric energy output by the second power converter in the second charging module may be provided for the second output apparatus. The charging system is a composite charging system including the first charging module that can flexibly allocate power and the second charging module that outputs fixed power.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A charging system, comprising n first charging modules, a first switch matrix, a second switch matrix, and m first output apparatuses, wherein n is a positive integer, and m is a positive integer greater than 1;
each first charging module comprises a plurality of first power converters, each first power converter has one output bus, the output bus of the first power converter is connected to the first switch matrix, and the first power converter is configured to output electric energy;
the first switch matrix is configured to connect or disconnect output buses of any two of the plurality of first power converters;
the second switch matrix is connected to each first charging module by using the first switch matrix, a first output apparatus j is connected to a corresponding first charging module by using the second switch matrix, and the first output apparatus j is a j^{th} first output apparatus in the m first output apparatuses, wherein 1≤j≤m; and
the second switch matrix is configured to provide electric energy output by one or more of the n first charging modules for the corresponding first output apparatus j.

2. The charging system according to claim 1, wherein the first switch matrix comprises at least one first switch 101; and
the output buses of the two first power converters are connected to a same first switch 101, wherein
when the same first switch 101 is in an on state, the output buses of the two first power converters are connected; or when the first switch 101 is in an off state, the output buses of the two first power converters are disconnected.

3. The charging system according to claim 1 or 2, wherein at least one first charging module is connected to at least two first output apparatuses.

4. The charging system according to any one of claims 1 to 3, wherein the second switch matrix comprises a plurality of second switches 102;
the first output apparatus j corresponds to x first charging modules, x is a positive integer not greater than n, and an i^{th} first charging module in the x first charging modules is a first charging module (i, j), wherein 1≤i≤x; and
the first output apparatus j is connected to the corresponding x first charging modules by using x second switches 102, wherein a second switch 102 (i, j) in the x second switches 102 is connected to an output bus of a first power converter in the first charging module (i, j), and is connected to the first output apparatus j; and when the second switch 102 (i, j) is in an on state, electric energy on the output bus of the first power converter in the first charging module (i, j) is transmitted to the first output apparatus j.

5. The charging system according to claim 1, wherein a quantity of the plurality of first power converters comprised in each first charging module is a preset quantity, and the preset quantity is 2, 3, or 4.

6. The charging system according to any one of claims 1 to 5, further comprising s second charging modules, wherein s is a positive integer greater than 1;
each second charging module comprises at least one second power converter, each second power converter has one output bus, the output bus of the second power converter is connected to the second switch matrix, and the second power converter is configured to output electric energy;
the first output apparatus j is connected to a corresponding second charging module by using the second switch matrix; and
the second switch matrix is further configured to provide electric energy output by second power converters in one or more of the s second charging modules for the corresponding first output apparatus j.

7. The charging system according to claim 6, wherein at least one second charging module is connected to at least two first output apparatuses.

8. The charging system according to claim 6 or 7, wherein the second switch matrix further comprises a plurality of third switches 103;
the first output apparatus j corresponds to y second charging modules, y is a positive integer not greater than s, and a k^{th} second charging module in the y second charging modules is a second charging module (k, j), wherein 1≤k≤y; and
the first output apparatus j is connected to the y corresponding second charging modules by using y third switches 103, wherein a third switch 103 (k, j) in the y third switches 103 is connected to an output bus of a second power converter in the second charging module (k, j), and is connected to the first output apparatus j; and when the third switch 103 (k, j) is in an on state, electric energy on the output bus of the second power converter in the second charging module (k, j) is transmitted to the first output apparatus j.

9. The charging system according to any one of claims 1 to 5, further comprising s second charging modules and p second output apparatuses, wherein s is a positive integer greater than 1, and p is a positive integer;
a second output apparatus a is connected to a corresponding second charging module by using the second switch matrix, and the second output apparatus a is an a^{th} second output apparatus in the p second output apparatuses, wherein 1≤a≤p; and
the second switch matrix is further configured to provide electric energy output by one or more of the s second charging modules for the corresponding second output apparatus a.

10. The charging system according to claim 9, wherein at least one second charging module is connected to at least two second output apparatuses.

11. The charging system according to claim 9 or 10, wherein the second switch matrix further comprises a plurality of fourth switches 104; and each second charging module comprises a plurality of second power converters;
the second output apparatus a corresponds to z second charging modules, z is a positive integer not greater than s, and an r^{th} second charging module in the z second charging modules is a second charging module (r, a), wherein 1≤r≤z; and
the second output apparatus a is connected to the z corresponding second charging modules by using z fourth switches 104, wherein a fourth switch 104 (r, a) in the z fourth switches 104 is connected to an output bus of a second power converter in the second charging module (r, a), and is connected to the second output apparatus a; and when the fourth switch 104 (r, a) is in an on state, electric energy on the output bus of the second power converter in the second charging module (r, a) is transmitted to the second output apparatus a.
